# EUROPEAN PATENT APPLICATION

(11) **EP 4 626 049 A1**
(43) Date of publication of application: **01.10.2025**
(21) Application number: 23885031.7
(22) Date of filing: 02.11.2023
(51) Int. Cl.: H04W 8/14

(54) **MESSAGE INTERACTION METHOD AND APPARATUS, AND NETWORK FUNCTION, RELATED DEVICE AND STORAGE MEDIUM**

(30) Priority: 02.11.2022 CN 202211364435
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: BAI, Xueqian, Beijing 100032 (CN); LIU, Chen, Beijing 100032 (CN)
(74) Representative: Hertin und Partner Rechts- und Patentanwälte PartG mbB
(86) International application number: PCT/CN2023/129275
(87) International publication number: WO 2024/094105

(57) **Abstract**

A message interaction method, a message interaction apparatus, network functions, related devices and a storage medium are provided. The message interaction method includes: receiving, by a first network function, a first request sent by a first device, wherein the first request is used to obtain a first Data Channel (DC) catalogue; deciding, based at least on first information, whether to return the first DC catalogue and/or create the first DC catalogue and/or return the first DC catalogue; wherein, the first information includes at least one of subscription information, terminal information, information carried in the first request, or user information; the first DC catalogue includes information related to a data channel program and/or a data channel application and/or a data channel service.

## Description

### CROSS-REFERENCE TO RELATED APPLICATION

The present application claims a priority to the Chinese patent application No. 202211364435.5 filed in China on November 2, 2022, a disclosure of which is incorporated herein by reference in its entirety.

### TECHNICAL FIELD

The present disclosure relates to the field of communications technology, and in particular, to a message interaction method, an apparatus, a network function, a related device and a storage medium.

### BACKGROUND

In related art, a 3rd Generation Partnership Project (3GPP) network only defines a Data Channel Application Repository (DCAR) with respect to an implementation mechanism based on a data channel, and uses the DCAR as a storage of a data channel application. However, the DCAR does not support downloading of a data channel program.

### SUMMARY

To solve the problem in related art, embodiments of the present disclosure provide a message interaction method, an apparatus, a network function, a related device and a storage medium.

Technical solutions of the embodiments of the present disclosure are implemented as follows.

The embodiments of the present disclosure provide a message interaction method, applied to a first network function. The method includes:
receiving a first request sent by a first device, wherein the first request is used to obtain a first Data Channel (DC) catalogue;
deciding, based at least on first information, whether to return the first DC catalogue and/or create the first DC catalogue and/or return the first DC catalogue; wherein, the first information includes at least one of subscription information, terminal information, information carried in the first request, or user information; the first DC catalogue includes information related to a data channel program and/or a data channel application and/or a data channel service.

In the above solutions, the first DC catalogue includes at least one of the following information related to the data channel program and/or the data channel application and/or the data channel service:
an identifier;
a priority level;
software information;
an auto trigger attribute; or
user information.

In the above solutions, the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

In the above solutions, the subscription information includes at least one of the followings:
data channel subscription information;
data channel service subscription information;
data channel application subscription information;
service subscription information;
user subscription information;
a data channel program or data channel programs that are allowed to use;
a data channel service or data channel services that are allowed to use;
a data channel application or data channel applications that are allowed to use; or
data channel authorization information.

In the above solutions, the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

In the above solutions, the terminal information includes at least one of the followings:
data channel capability information of a terminal; or
terminal type information.

In the above solutions, the information carried in the first request includes at least one of the followings:
data channel information; or
the user information.

In the above solutions, the user information at least includes a user number.

In the above solutions, creating, based at least on the first information, the first DC catalogue and/or returning, based at least on the first information, the first DC catalogue includes:
creating the first DC catalogue and/or returning the first DC catalogue in the case that at least one of the following conditions is met:
the data channel program or the data channel programs are allowed and/or supported to use;
the data channel service or the data channel services are allowed and/or supported to use; or
the data channel application or the data channel applications are allowed and/or supported to use.

In the above solutions, the method further includes:
not creating the first DC catalogue and/or not returning the first DC catalogue in the case that at least one of the following conditions is met:
the data channel program or the data channel programs are not allowed and/or not supported to use;
the data channel service or the data channel services are not allowed and/or not supported to use; or
the data channel application or the data channel applications are not allowed and/or not supported to use.

In the above solutions, the first device includes a second network function and/or a first terminal; after returning the first DC catalogue, the method further includes:
receiving a second request sent by the second network function; wherein the second request is sent by the first terminal and is used to request downloading a first program and/or a first application and/or a service program and/or a service application;
delivering the first program and/or the first application and/or the service program and/or the service application to the second network function.

In the above solutions, the first device includes a first terminal; before receiving the first request sent by the first device, the method further includes:
receiving a data channel establishment request sent by the first terminal;
returning, to the first terminal, a response to the data channel establishment request; wherein the response to the data channel request carries a data channel negotiation result.

In the above solutions, before creating the first DC catalogue and/or returning the first DC catalogue, the method further includes:
receiving the data channel program and/or the data channel application and/or the data channel service uploaded by a server;
wherein the uploaded data channel program and/or data channel application and/or data channel has been verified or approved.

In the above solutions, the method further includes:
receiving the subscription information and/or the user information sent by a server.

Embodiments of the present disclosure further provide a message interaction method, applied to a second network function, and the method includes:
receiving a first request sent by a first terminal, and sending the first request to a first network function; wherein the first request is used to obtain a first Data Channel (DC) catalogue;
receiving a first response returned by the first network function, and sending the first response to the first terminal; wherein
the first response indicates that the first DC catalogue is not returned, or the first response carries the first DC catalogue; wherein the first DC catalogue is created based at least on first information, and includes information related to a data channel program and/or a data channel application and/or a data channel service; the first information includes at least one of subscription information, terminal information, information carried in the first request, or user information.

In the above solutions, the first DC catalogue includes at least one of the following information related to the data channel program and/or the data channel application and/or the data channel service:
an identifier;
a priority level;
software information;
an auto trigger attribute; or
user information.

In the above solutions, the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

In the above solutions, the subscription information includes at least one of the followings:
data channel subscription information;
data channel service subscription information;
data channel application subscription information;
service subscription information;
user subscription information;
a data channel program allowed to use;
a data channel service allowed to use;
a data channel application allowed to use; or
data channel authorization information.

In the above solutions, the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

In the above solutions, the terminal information includes at least one of the followings:
data channel capability information of a terminal; or
terminal type information.

In the above solutions, the information carried in the first request includes at least one of the followings:
data channel information; or
the user information.

In the above solutions, the user information at least includes a user number.

In the above solutions, the method further includes:
in the case that the first response carries the first DC catalogue, receiving a second request sent by the first terminal; wherein the second request is used to request downloading a first program and/or a first application and/or a service program and/or a service application;
delivering the first program and/or the first application and/or the service program and/or the service application to the first terminal.

In the above solutions, the delivering the first program and/or the first application and/or the service program and/or the service application to the first terminal includes at least one of the followings:
delivering, to the first terminal, the first program and/or the first application and/or the service program and/or the service application that is stored locally; or
sending the second request to the first network function, and forwarding to the first terminal the first program and/or the first application and/or the service program and/or the service application delivered by the first network function.

Embodiments of the present disclosure further provide a message interaction method, applied to a first terminal, and the method includes:
sending a first request to a first network function and/or a second network function, wherein the first request is used to obtain a first Data Channel (DC) catalogue;
receiving a first response returned by the first network function and/or the second network function; wherein
the first response indicates that the first DC catalogue is not returned, or the first response carries the first DC catalogue; wherein the first DC catalogue is created by the first network function based at least on first information, and includes information related to a data channel program and/or a data channel application and/or a data channel service; the first information includes at least one of subscription information, terminal information, information carried in the first request, or user information.

In the above solutions, the first DC catalogue includes at least one of the following information related to the data channel program and/or the data channel application and/or the data channel service:
an identifier;
a priority level;
software information;
an auto trigger attribute; or
user information.

In the above solutions, the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

In the above solutions, the subscription information includes at least one of the followings:
data channel subscription information;
data channel service subscription information;
data channel application subscription information;
service subscription information;
user subscription information;
a data channel program allowed to use;
a data channel service allowed to use;
a data channel application allowed to use; or
data channel authorization information.

In the above solutions, the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

In the above solutions, the terminal information includes at least one of the followings:
data channel capability information of the terminal;
terminal type information.

In the above solutions, the information carried in the first request includes at least one of the followings:
data channel information; or
the user information.

In the above solutions, the user information at least includes a user number.

In the above solutions, the method further includes:
sending a second request to the second network function based on the first DC catalogue; wherein the second request is used to request downloading a first program and/or a first application and/or a service program and/or a service application;
receiving the first program and/or the first application and/or the service program and/or the service application delivered by the second network function.

In the above solutions, the method further includes:
deciding whether to automatically send the second request to the second network function based on an auto trigger attribute included in the first DC catalogue.

In the above solutions, before the sending the first request to the first network function and/or the second network function, the method includes:
sending a data channel establishment request to the first network function;
receiving a response to the data channel establishment request; wherein the response to the data channel establishment request is returned by the first network function, and carries a data channel negotiation result.

Embodiments of the present disclosure further provide a message interaction method, applied to a server, and the method includes:
receiving a data channel program and/or a data channel application and/or a data channel service uploaded by a second terminal;
sending, to a first network function, the data channel program and/or data channel application and/or data channel service that is verified or approved;
wherein the verified or approved data channel program and/or data channel application and/or data channel service is used by the first network function to, upon receiving a first request, decide, based at least on first information, whether to return a first Data Channel (DC) catalogue and/or create the first DC catalogue and/or return the first DC catalogue; the first request is used to obtain the first DC catalogue; the first DC catalogue includes information related to the data channel program and/or the data channel application and/or the data channel service; the first information includes at least one of subscription information, terminal information, information carried in the first request, or user information.

In the above solutions, the method further includes:
sending the subscription information and/or the user information to the first network function.

In the above solutions, the first DC catalogue includes at least one of the following information related to the data channel program and/or the data channel application and/or the data channel service:
an identifier;
a priority level;
software information;
an auto trigger attribute; or
user information.

In the above solutions, the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

In the above solutions, the subscription information includes at least one of the followings:
data channel subscription information;
data channel service subscription information;
data channel application subscription information;
service subscription information;
user subscription information;
a data channel program allowed to use;
a data channel service allowed to use;
a data channel application allowed to use; or
data channel authorization information.

In the above solutions, the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

In the above solutions, the terminal information includes at least one of the followings:
data channel capability information of a terminal; or
terminal type information.

In the above solutions, the information carried in the first request includes at least one of the followings:
data channel information; or
the user information.

In the above solutions, the user information at least includes a user number.

Embodiments of the present disclosure further provide a message interaction apparatus, including:
a first receiving unit, configured to receive a first request sent by a first device, the first request being used to obtain a first Data Channel (DC) catalogue;
a first processing unit, configured to decide, based at least on first information, whether to return the first DC catalogue and/or create the first DC catalogue and/or return the first DC catalogue; wherein the first information includes at least one of subscription information, terminal information, information carried in the first request, or user information; the first DC catalogue includes information related to a data channel program and/or a data channel application and/or a data channel service.

Embodiments of the present disclosure further provide a message interaction apparatus, including:
a first transceiver unit, configured to receive a first request sent by a first terminal, and send the first request to a first network function; wherein the first request is used to obtain a first Data Channel (DC) catalogue;
a second transceiver unit, configured to receive a first response returned by the first network function and send the first response to the first terminal; wherein
the first response indicates that the first DC catalogue is not returned, or the first response carries the first DC catalogue; wherein the first DC catalogue is created based at least on first information, and includes information related to a data channel program and/or a data channel application and/or a data channel service; the first information includes at least one of subscription information, terminal information, information carried in the first request, or user information.

Embodiments of the present disclosure further provide a message interaction apparatus, including:
a first sending unit, configured to send a first request to a first network function and/or a second network function, wherein the first request is used to obtain a first Data Channel (DC) catalogue;
a second receiving unit, configured to receive a first response returned by the first network function and/or the second network function; wherein
the first response indicates that the first DC catalogue is not returned, or the first response carries the first DC catalogue; wherein the first DC catalogue is created by the first network function based at least on first information, and includes information related to a data channel program and/or a data channel application and/or a data channel service; the first information includes at least one of subscription information, terminal information, information carried in the first request, or user information.

Embodiments of the present disclosure further provide a message interaction apparatus, including:
a third receiving unit, configured to receive a data channel program and/or a data channel application and/or a data channel service uploaded by a second terminal;
a second sending unit, configured to send, to a first network function, the data channel program and/or data channel application and/or data channel service that is verified or approved;
wherein the verified or approved data channel program and/or data channel application and/or data channel service is used by the first network function to, upon receiving a first request, decide, based at least on first information, whether to return a first Data Channel (DC) catalogue and/or create the first DC catalogue and/or return the first DC catalogue; the first request is used to obtain the first DC catalogue; the first DC catalogue includes information related to the data channel program and/or the data channel application and/or the data channel service; the first information includes at least one of subscription information, terminal information, information carried in the first request, or user information.

Embodiments of the present disclosure further provide a first network function, including: a first processor and a first communication interface; wherein
the first communication interface is configured to receive a first request sent by a first device, wherein the first request is used to obtain a first Data Channel (DC) catalogue;
the first processor is configured to decide, based at least on first information, whether to return the first DC catalogue and/or create the first DC catalogue and/or return the first DC catalogue; wherein the first information includes at least one of subscription information, terminal information, information carried in the first request, or user information; the first DC catalogue includes information related to a data channel program and/or a data channel application and/or a data channel service.

Embodiments of the present disclosure further provide a second network function, including: a second processor and a second communication interface; wherein,
the second communication interface is configured to receive a first request sent by a first terminal, and send the first request to a first network function; and to receive a first response returned by the first network function, and send the first response to the first terminal; wherein
the first request is used to obtain a first Data Channel (DC) catalogue; the first response indicates that the first DC catalogue is not returned, or the first response carries the first DC catalogue; wherein the first DC catalogue is created based at least on first information, and includes information related to a data channel program and/or a data channel application and/or a data channel service; the first information includes at least one of subscription information, terminal information, information carried in the first request, or user information.

Embodiments of the present disclosure further provide a first terminal, including: a third processor and a third communication interface; wherein
the third communication interface is configured to send a first request to a first network function and/or a second network function, wherein the first request is used to obtain a first Data Channel (DC) catalogue; and to receive a first response returned by the first network function and/or the second network function; wherein
the first response indicates that the first DC catalogue is not returned, or the first response carries the first DC catalogue; wherein the first DC catalogue is created by the first network function based at least on first information, and includes information related to data channel program and/or data channel application and/or data channel service; the first information includes at least one of subscription information, terminal information, information carried in the first request, or user information.

Embodiments of the present disclosure further provide a server, including: a fourth processor and a fourth communication interface; wherein
the fourth communication interface is configured to receive a data channel program and/or a data channel application and/or a data channel service uploaded by a second terminal; and to send, to a first network function, the data channel program and/or data channel application and/or data channel service that is verified or approved; wherein
the verified or approved data channel program and/or data channel application and/or data channel service is used by the first network function to, upon receiving a first request, decide, based at least on first information, whether to return a first Data Channel (DC) catalogue and/or create the first DC catalogue and/or return the first DC catalogue; the first request is used to obtain the first DC catalogue; the first DC catalogue includes information related to the data channel program and/or the data channel application and/or the data channel service; the first information includes at least one of subscription information, terminal information, information carried in the first request, or user information.

Embodiments of the present disclosure further provide a first network function, including: a first processor and a first memory configured to store a computer program executable by a processor,
wherein the first processor is configured to execute the computer program to perform the steps of any method on the first network function side.

Embodiments of the present disclosure further provide a second network function, including: a second processor and a second memory configured to store a computer program executable by a processor,
wherein the second processor is configured to execute the computer program to perform the steps of any method on the second network function side.

Embodiments of the present disclosure further provide a first terminal, including: a third processor and a third memory configured to store a computer program executable by a processor,
wherein the third processor is configured to execute the computer program to perform the steps of any method on the first terminal side.

Embodiments of the present disclosure further provide a server, including: a fourth processor and a fourth memory configured to store a computer program executable by a processor,
wherein the fourth processor is configured to execute the computer program to perform the steps of any method on the server side.

Embodiments of the present disclosure further provide a storage medium, storing thereon a computer program, wherein the computer program is used to be executed by a processor to implement the steps of any method on the first network function side, or the steps of any method on the second network function side, or the steps of any method on the first terminal side, or the steps of any method on the server side.

In the message interaction method, the apparatus, the network function, the related device and the storage medium provided in the embodiments of the present disclosure, the first terminal sends a first request to the first network function and/or the second network function, and the first request is used to obtain the first DC catalogue information; the second network function receives the first request sent by the first terminal and sends the first request to the first network function; the first network function receives the first request sent by the first terminal and/or the second network function, and decides whether to return the first DC catalogue and/or create the first DC catalogue and/or return the first DC catalogue based at least on the first information; the first information includes at least one of subscription information, terminal information, information carried in the first request, or user information; the second network function receives the first response returned by the first network function and sends the first response to the first terminal; wherein the first response indicates that the first DC catalogue is not returned, or the first response carries the first DC catalogue; the first DC catalogue information includes information related to the data channel program and/or the data channel application and/or the data channel service. In the above solutions, the first network function can decide whether to return the first DC catalogue based at least on the first information. When it is decided that the DC catalogue needs to be returned, the first network function can create and/or return the first DC catalogue based at least on the first information. As a result, the first DC catalogue can be exchanged between the network side and the terminal side, enabling the terminal to download a program and/or an application based on the acquired first DC catalogue, thereby realizing the downloading of the data channel program and/or the data channel application. Additionally, since the first DC catalogue includes information related to the data channel program and/or the data channel application and/or the data channel service, the first network function can obtain information related to the data channel program and/or the data channel application and/or the data channel service, thereby realizing the uploading of the data channel programs and/or the data channel applications.

### BRIEF DESCRIPTION OF THE DRAWINGS

FIG. 1 is a schematic diagram of an implementation process of a message interaction method according to an embodiment of the present disclosure;
FIG. 2 is a schematic diagram of an implementation process of a message interaction method according to an embodiment of the present disclosure;
FIG. 3 is a schematic diagram of an implementation process of a message interaction method according to an embodiment of the present disclosure;
FIG. 4 is a schematic diagram of an implementation process of a message interaction method according to an embodiment of the present disclosure;
FIG. 5 is a schematic diagram of an interaction process of a message interaction method according to an embodiment of the present disclosure;
FIG. 6 is a schematic structural diagram of a message interaction apparatus according to an embodiment of the present disclosure;
FIG. 7 is a schematic structural diagram of a message interaction apparatus according to an embodiment of the present disclosure;
FIG. 8 is a schematic structural diagram of a message interaction apparatus according to an embodiment of the present disclosure;
FIG. 9 is a schematic structural diagram of a message interaction apparatus according to an embodiment of the present disclosure;
FIG. 10 is a schematic structural diagram of a first network function according to an embodiment of the present disclosure;
FIG. 11 is a schematic structural diagram of a second network function according to an embodiment of the present disclosure;
FIG. 12 is a schematic structural diagram of a first terminal according to an embodiment of the present disclosure;
FIG. 13 is a schematic structural diagram of a message server according to an embodiment of the present disclosure.

### DETAILED DESCRIPTION

In the related art, it does not define an implementation mechanism or a process for the following aspects:
how to create a data channel program catalogue (list), and composition information of the data channel program catalogue;
how the data channel program catalogue is exchanged between a network side and a terminal;
how uploading or downloading of a data channel program is implemented.

Thus, in the related art, an implementation mechanism based on the data channel only defines a Data Channel Application Repository (DCAR), and uses the DCAR as a storage for a data channel application. However, the relevant implementation mechanism or process of the data channel program or the data channel programs are not defined, and the DCAR does not support the downloading of the data channel program.

Based on the above, in various embodiments of the present disclosure, a first terminal sends a first request to a first network function and/or a second network function, and the first request is used to obtain a first Data Channel (DC) catalogue information; the second network function receives the first request sent by the first terminal and sends the first request to the first network function; the first network function receives the first request sent by the first terminal and/or the second network function, and decides whether to return the first DC catalogue and/or create the first DC catalogue and/or return the first DC catalogue based at least on first information; the first information includes at least one of subscription information, terminal information, information carried in the first request, or user information; the second network function receives a first response returned by the first network function and sends the first response to the first terminal; wherein the first response indicates that the first DC catalogue is not returned, or the first response carries the first DC catalogue; the first DC catalogue information includes information related to a data channel program and/or a data channel application and/or a data channel service. In the above solutions, the first network function can decide whether to return the first DC catalogue based at least on the first information. When it is decided that the DC catalogue needs to be returned, the first network function can create and/or return the first DC catalogue based at least on the first information. As a result, the first DC catalogue can be exchanged between a network side and a terminal side, enabling the terminal to download a program and/or an application based on the acquired first DC catalogue, thereby realizing the downloading of the data channel program and/or the data channel application. Additionally, since the first DC catalogue includes information related to the data channel program and/or the data channel application and/or the data channel service, the first network function can obtain information related to the data channel program and/or the data channel application and/or the data channel service, thereby realizing the uploading of the data channel program and/or the data channel application.

The following provides a more detailed description of the present disclosure with reference to the accompanying drawings and embodiments.

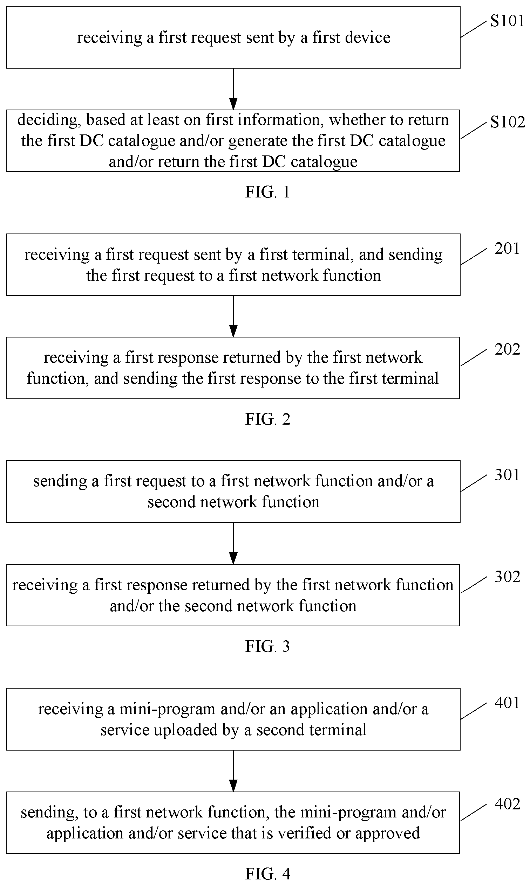

Embodiments of the present disclosure provide a message interaction method, applied to a first network function. As shown in FIG. 1, the method includes the following steps.

Step 101: receiving a first request sent by a first device, wherein the first request is used to obtain a first Data Channel (DC) catalogue.

The first device includes a first terminal and/or a second network function. The first terminal refers to any terminal in general. The second network function includes at least one of the followings:
Data Communication Management Function (DCMF);
Media Repository Server (MRS);
Data Channel Media Function (DCMF); or
Data Channel Media (DCM).

The first request is sent by the first terminal, that is, the first request is created by the first terminal. The first terminal can send the first request directly to the first network function, or send the first request to the first network function through the second network function. When the first terminal sends information or a request to the first network function through the second network function, the information or request is first forwarded by the Aggregated Media Function (CMF) to the second network function, and then further forwarded by the second network function to the first network function. The DCMF is also referred to as an aggregated media function, and the CMF serves as a first-level network element or a first-level network function of an IP Multimedia Subsystem (IMS) network.

The first network function may receive the first request sent by the first terminal, or may receive the first request sent by the first terminal through the second network function. The first request may carry information.

The first network function includes at least one of the followings:
Media Resource Control Function (MRCF);
Data Channel Control Function (DCCF);
Data Channel Signaling Function (DCSF);
Data Channel Service Function or Data channel service Function (DCSF);
DCAR; or
Data Channel Application Repository Server (DCARS).

In this embodiment, the network function can also be understood as a network element or a device. The MRCF, the DCCF and the DCSF can be a same network function, a same network element or a same device. The DCAR and the DCARS can be a same network function, a same network element or a same device; the DCAR can be a built-in module or a built-in function of the DCCF; the DCARS can be integrated with the DCCF.

Step 102: deciding, based at least on first information, whether to return the first DC catalogue and/or create the first DC catalogue and/or return the first DC catalogue.

The first information includes at least one of subscription information, terminal information, information carried in the first request, or user information; the first DC catalogue includes information related to the data channel program and/or the data channel application and/or the data channel service.

The first network function decides whether to return the first DC catalogue based at least on the first information and obtains a first determination result. Based on the first determination result, it returns a first response to the first device. The first information includes at least one of subscription information, terminal information, information carried in the first request, or user information. The first response indicates that the first DC catalogue is not returned, or the first response carries the first DC catalogue.

In the case that the first determination result indicates that the first DC catalogue is not returned, the first network function does not respond to the first request and returns a first response to the first device indicating that the first DC catalogue is not returned. In the case that the first determination result indicates that the first DC catalogue is returned, the first network function responds to the first request, creates the first DC catalogue based at least on the first information, and/or returns the first DC catalogue to the first device. In this case, the first response returned by the first network function to the first device carries the first DC catalogue.

For example, the first network function can decide, based on the subscription information, the terminal information and the user information, whether to return the first DC catalogue to obtain a first determination result. When the first determination result indicates that the first DC catalogue is returned, the first network function responds to the first request and creates the first DC catalogue based at least on one of the subscription information, the terminal information, the information carried in the first request, the user information, or a service attribute, and/or returns the first DC catalogue to the first device. The service attribute includes a data channel service ID (Service ID) and/or an auto trigger attribute. The service attribute can be carried in a registration request received by the first network function, and the registration request is used to register a data channel service. The registration request can be sent by an Application Server (AS) and/or a Multimedia Application Server (MMTEL AS).

The data channel program can be understood as a program that can be used without installation. The data channel application can be understood as an application that can be used without installation. A program or an application that can be used without installation can be referred to as a mini-program. The data channel program, the data channel application and the data channel service can be considered equivalent or interchangeable.

It should be noted that the first network function may create a first DC catalogue based at least on the first information before receiving the first request. In this case, the first information includes at least one of the subscription information, the terminal information or the user information. The first network function may also create a first DC catalogue based at least on the first information after receiving the first request. In this case, the first information includes at least one of the subscription information, the terminal information, the user information or the information carried in the first request. The information carried in the first request may include the user information and/or the data channel information and/or the terminal information. In other words, when the first determination result indicates that the first DC catalogue is returned, the first DC catalogue returned by the first network function to the first device may be created before receiving the first request, or may be created or updated after receiving the first request.

The method for creating the first DC catalogue based at least on the first information may include:
deciding, based at least on first information, the a data channel program and/or a data channel application and/or a data channel service that are allowed and/or supported for use. Then, based on the decided data channel service that are allowed and/or supported for use, deciding the data channel program and/or data channel application that can implement the corresponding data channel service, or deciding the data channel application and/or data channel program that can provide a service for the corresponding service. Based on the information related to the decided data channel program and/or data channel application and/or data channel service that are allowed and/or supported for use, creating a first DC catalogue.

The first DC catalogue may include information related to a first type of data channel program and/or data channel application and/or data channel service, and/or information related to a second type of data channel program and/or data channel application and/or data channel service. During generation of the first DC catalogue, classification of the data channel program and/or the data channel application and/or the data channel service may be performed based at least on the first information; in a created first DC catalogue, information related to different types of the data channel programs and/or the data channel applications and/or the data channel services may be organized on separate pages.

All data channel programs and/or data channel applications and/or data channel services included in the first DC catalogue are those supported and/or allowed to be used by the first terminal that creates the first request.

The first type of the data channel program and/or the data channel application and/or the data channel service includes at least one of the followings:
a generic data channel program and/or a generic data channel application and/or a generic data channel service;
a data channel program and/or a data channel application and/or a data channel service that do not require subscription and/or activation; or
a data channel program and/or a data channel application and/or a data channel service that are subscribed to and/or activated by default.

The second type of the data channel program and/or the data channel application and/or the data channel service includes at least one of the followings:
a non-generic data channel program and/or a non-generic data channel application and/or a non-generic data channel service;
a data channel program and/or a data channel application and/or a data channel service that require user subscription; or
data channel program and/or data channel application and/or data channel service that require user activation.

Whether the first DC catalogue includes information related to the second type of the data channel program and/or the data channel application and/or the data channel service may depend on the information carried in the first request.

For example, the first DC catalogue created by the first network function before receiving the first request only includes information related to the first type of the data channel program and/or the data channel application and/or the data channel service. After receiving the first request, the first network function may update the first DC catalogue created before receiving the first request based on the information carried in the first request, such as user information, data channel capability information, etc.

The terminal information included in the first information may be understood as terminal-related information, for example, data channel capability information of the terminal.

In an embodiment, the first DC catalogue includes at least one of the following information related to the data channel program and/or the data channel application and/or the data channel service:
an identifier;
a priority level;
software information;
an auto trigger attribute; or
user information.

The first DC catalogue stores the identifier, the priority level, the software information, the auto trigger attribute and the user information of a same data channel program or a same data channel application or a same data channel service in an associated manner.

The identifier (ID) of the data channel program includes at least the data channel program ID; the identifier of the data channel application includes the data channel application ID; and the identifier of the data channel service includes the data channel service ID. It should be noted that the identifiers of the data channel program and/or the data channel application and/or the data channel service match the service information (service ID) subscribed by the user and/or the terminal capability (capability).

The priority level can also be understood as an order or sequence. The software information includes at least software version information. The user information includes user information of a calling user and/or a called user. The auto trigger attribute includes an autoload attribute and/or an auto-loading attribute and/or an auto-downloading attribute.

In an embodiment, the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

In an embodiment, the user information at least includes a user number.

The user information included in the first information at least includes a user number. The user number includes at least one of the followings:
Mobile Subscriber Integrated Services Digital Network number (MSISDN), also referred to as mobile phone number;
IMS Private User Identity (IMPI); or
IMS Public User Identity (IMPU).

The IMPI and the IMPU are user identifiers in an IMS network.

In an embodiment, the subscription information includes at least one of the followings:
data channel subscription information;
data channel service subscription information;
data channel application subscription information;
service subscription information;
user subscription information;
a data channel program or data channel programs that are allowed to use;
a data channel service or data channel services that are allowed to use;
a data channel application or data channel applications that are allowed to use; or
data channel authorization information.

The data channel authorization information includes the data channel authorization information of the user and/or the access permission of the user for the data channel.

In an embodiment, the data channel authorization information is used to indicate at least one of the followings:
whether a data channel capability is allowed to use;
whether the data channel service or the data channel services are allowed to use and/or activate;
whether the data channel application or the data channel applications are allowed to use and/or activate; or
whether the data channel program or the data channel programs are allowed to use and/or activate.

In an embodiment, the terminal information includes at least one of the followings:
data channel capability information of a terminal; or
terminal type information.

The data channel capability information is used to indicate whether the terminal supports a data channel or possesses a data channel capability. The terminal type information can be understood as a terminal model, category information of the terminal, size information of the display screen of the terminal, etc. A display format of the first DC catalogue can correspond to the terminal type information.

In an embodiment, the information carried in the first request includes at least one of the followings:
data channel information; or
user information.

The data channel information may include data channel capability information and may also include a data channel identifier. The user information carried in the first request may include user information of a calling user and/or a called user. For example, a user number of the calling user and/or the called user, the user number including at least one of the MSISDN, the IMPI or the IMPU.

After receiving the first request, the first network function may respond to the first request and return a first DC catalogue. Based on this, in an embodiment, the creating the first DC catalogue and/or returning the first DC catalogue based at least on the first information includes:
creating the first DC catalogue and/or returning the first DC catalogue in the case that at least one of the following conditions is met:
the data channel program or the data channel programs are allowed and/or supported to use;
the data channel service or the data channel services are allowed and/or supported to use; or
the data channel application or the data channel applications are allowed and/or supported to use.

The first network function decides, based at least on the first information, whether any of the above conditions is met to obtain a second determination result. In the case that the second determination result indicates that at least one of the above conditions is met, the first network function creates a first DC catalogue and/or returns the first DC catalogue to the first device. The first network function may return to the first device the first DC catalogue created before receiving the first request; it may also create the first DC catalogue based on the first information and return the created first DC catalogue to the first device. In this case, the first information may include the information carried in the first request.

For example, in the case that the first device includes a second network function, the first terminal may send the first request to the first network function through the second network function.

The first network function receives the first request; in the case that it is decided based at least on the first information that the first terminal meets at least one of the above conditions, it may return the first DC catalogue created before receiving the first request to the second network function; it may also create the first DC catalogue based at least on the first information and return the first DC catalogue to the second network function, so that the second network function forwards the received first DC catalogue to the first terminal when receiving the first DC catalogue returned by the first network function. The first DC catalogue includes information related to the data channel program and/or the data channel service and/or the data channel application that are supported and/or allowed for use by the first terminal.

In the case that the first terminal supports activation or is allowed to use a generic service and/or a generic program, the first DC catalogue only includes information related to the first type of the data channel program and/or the data channel service and/or the data channel application.

In the case that the first terminal supports the activation or is allowed to use a non-generic service and/or a non-generic program, the first DC catalogue includes at least information related to the second type of the data channel program and/or the data channel service and/or the data channel application, and may also include information related to the first type of the data channel program and/or the data channel service and/or the data channel application.

After receiving the first request, the first network function may not respond to the first request. Based on this, the method further includes:
not creating the first DC catalogue and/or not returning the first DC catalogue in the case that at least one of the following conditions is met:
the data channel program or the data channel programs are not allowed and/or not supported to use;
the data channel service or the data channel services are not allowed and/or not supported to use; or
the data channel application or the data channel applications are not allowed and/or not supported to use.

The first network function decides whether any of the above conditions is met based on the first information to obtain a third determination result; when the third determination result indicates that at least one of the above conditions is met, the first DC catalogue is not returned to the first device. In this case, the first DC catalogue is not created and/or the first DC catalogue is not returned.

For example, when the first terminal does not possess a data channel capability and/or the first terminal is not allowed to use the data channel capability, indicating that the first terminal is not allowed to use the data channel program and/or the data channel application and/or the data channel service, the first network function does not return the first DC catalogue to the first device.

The first device includes a second network function and/or a first terminal. In an embodiment, after returning the first DC catalogue, the method further includes:
receiving a second request sent by the second network function; wherein the second request is sent by the first terminal and is used to request downloading of a first program and/or a first application and/or a service program and/or a service application;
delivering the first program and/or the first application and/or the service program and/or the service application to the second network function.

The second network function receives the second request sent by the first terminal and forwards the received second request to the first network function; the second request carries at least an identifier of the first program and/or the first application and/or the service program and/or the service application, and may also carry software information of the first program and/or the first application and/or the service program and/or the service application, and the software information includes software version information.

The first network function receives the second request sent by the second network function, searches and/or obtains the corresponding first program and/or first application and/or service program and/or service application based on the information carried in the second request. When the corresponding first program and/or first application and/or service program and/or service application are obtained, the first network function delivers the obtained first program and/or first application and/or service program and/or service application to the second network function. The first network function may locally search for the corresponding first program and/or first application and/or service program and/or service application locally, or obtain the corresponding first program and/or first application and/or service program and/or service application from an application server. The application server includes a data channel application server. The first program can be understood as any program in the first DC catalogue, the first application can be understood as any application in the first DC catalogue, the service program can be understood as any program related to the data channel service in the first DC catalogue, and the service application can be understood as any application related to the data channel service in the first DC catalogue.

It should be noted that the first network function may return a second response to the second network function. In the case that the first network function obtains the corresponding first program and/or first application and/or service program and/or service application, the second response carries the corresponding first program and/or first application and/or service program and/or service application. In the case that the first network function fails to obtain the corresponding first program and/or first application and/or service program and/or service application, the second response may indicate that the corresponding first program and/or first application and/or service program and/or service application does not exist, or the download fails, or the response to the second request is refused.

It should be noted that the first request, the first response, the first DC catalogue, the second request, the second response, the data channel program, the data channel application, the service program, and the service application interacted between the first network function and the first device are all transmitted through a data channel established between the first device and the first network function.

Before transmitting information through the data channel, the data channel needs to be established first. Based on this, in an embodiment, the first device includes a second network function and/or a first terminal; before receiving the first request sent by the first device, the method further includes:
receiving a data channel establishment request sent by the first terminal;
returning, to the first terminal, a response to the data channel establishment request;
wherein the response to the data channel establishment request carries a data channel negotiation result.

The data channel establishment request can be understood as a call request or a data channel request, etc. The data channel establishment request is used to request the establishment of a data channel. The data channel establishment request can carry user information and/or terminal information and/or data channel information of the first terminal; the user information at least includes a user number, such as the MSISDN, the IMPU, the IMPI, etc. The terminal information includes data channel capability information of the terminal, and/or terminal type information. The data channel information includes data channel capability information.

Upon receiving the data channel establishment request sent by the first terminal, the first network function establishes a data channel between the first network function and the second network function, and sends second information to the second network function through the MMTEL AS, enabling the second network function to establish the data channel between the second network function and the first terminal based on the second information. The second information is used to instruct the second network function to establish the data channel between the second network function and the first terminal, and to instruct the second network function to reserve data channel media resource for the data channel.

The first network function receives the data channel negotiation result returned by the second network function, and returns a response to the data channel establishment request to the first terminal. The response to the data channel establishment request carries at least the data channel negotiation result, and may also carry the user information carried by the data channel establishment request, the data channel capability of the first network function and/or the second network function. The data channel negotiation result indicates the negotiation result of the data channel between the second network function and the first terminal, and may include the data channel resource of the data channel, and may also include a corresponding Internet Protocol (IP) address, port, etc.

The first DC catalogue includes information related to the data channel program and/or the data channel application and/or the data channel service. Therefore, before creating the first DC catalogue, it is necessary to obtain the data channel program and/or the data channel application and/or the data channel service. Based on this, in an embodiment, before creating the first DC catalogue and/or returning the first DC catalogue, the method further includes:
receiving the data channel program and/or the data channel application and/or the data channel service uploaded by a server;
wherein the uploaded data channel program and/or data channel application and/or data channel has been verified or approved.

The server may include a server running a Business & Operation Support System (BOSS) and/or a management platform, and/or a data channel application server.

The data channel program uploaded by the server carries information related to the data channel program, for example, the data channel program carries the identifier, the priority level, the software information, the auto trigger attribute, etc. The data channel application uploaded by the server carries information related to the data channel application; the data channel service uploaded by the server carries information related to the data channel service.

Before creating the first DC catalogue based on the first information, it is necessary to obtain the subscription information and/or user information included in the first information. Based on this, in an embodiment, the method further includes:
receiving the subscription information and/or the user information sent by a server.

The server synchronizes the locally stored subscription information and/or user information to the first network function.

In the case that the first device includes a second network function, the first request sent by the first terminal is forwarded by the second network function to the first network function. Therefore, Embodiments of the present disclosure further provide a message interaction method, applied to a second network function. The second network function includes the DCMF and/or the MRS and/or the DCMF and/or the DCM. As shown in FIG. 2, the method includes the following steps.

Step 201: receiving a first request sent by a first terminal, and sending the first request to a first network function; wherein the first request is used to obtain a first Data Channel (DC) catalogue.

The second network function forwards the first request sent by the first terminal to the first network function.

The second network function may receive a first request sent by the first terminal through the CMF.

Step 202: receiving a first response returned by the first network function, and sending the first response to the first terminal.

The first response indicates that the first DC catalogue is not returned, or the first response carries the first DC catalogue; wherein the first DC catalogue is created based at least on first information, and includes information related to data channel program and/or data channel application and/or data channel service; the first information includes at least one of subscription information, terminal information, information carried in the first request, or user information.

The first network function decides whether to return the first DC catalogue based at least on the first information, and returns a first response based on the obtained determination result. The second network function receives the first response returned by the first network function, and forwards the received first response to the first terminal.

In the case that the determination result obtained by the first network function indicates that the first DC catalogue is not returned, the first response indicates that the first DC catalogue is not returned. In the case that the determination result obtained by the first network function indicates that the first DC catalogue is returned, the first response carries the first DC catalogue.

In an embodiment, the first DC catalogue includes at least one of the following information related to the data channel program and/or the data channel application and/or the data channel service:
an identifier;
a priority level;
software information;
an auto trigger attribute; or
user information.

The software information at least includes software version information; the user information may include at least one of the MSISDN, the IMPI or the IMPU.

In an embodiment, the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

In an embodiment, the subscription information includes at least one of the followings:
data channel subscription information;
data channel service subscription information;
data channel application subscription information;
service subscription information;
user subscription information;
a data channel program allowed to use;
a data channel service allowed to use;
a data channel application allowed to use; or
data channel authorization information.

In an embodiment, the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

In an embodiment, the terminal information includes at least one of the followings:
data channel capability information of a terminal; or
terminal type information.

In an embodiment, the information carried in the first request includes at least one of the followings:
data channel information; or
the user information.

In an embodiment, the user information at least includes a user number.

After the second network function returns the first DC catalogue to the first terminal, the first terminal may initiate a download request based on the received first DC catalogue. Based on this, in an embodiment, the method further includes:
in the case that the first response carries the first DC catalogue, receiving a second request sent by the first terminal; wherein the second request is used to request downloading of a first program and/or a first application and/or a service program and/or a service application;
delivering, to the first terminal, the first program and/or the first application and/or the service program and/or the service application.

The second network function receives a second request sent by the first terminal based on the first DC catalogue. The second request carries at least an identifier of the first program and/or the first application and/or the service program and/or the service application, and may also carry software information of the first program and/or the first application and/or the service program and/or the service application.

The second network function, based on the information carried in the second request, obtains the corresponding first program and/or first application and/or service program and/or service application, and delivers the obtained first program and/or first application and/or service program and/or service application to the first terminal. The second network function may locally search for the corresponding first program and/or first application and/or service program and/or service application, or obtain the corresponding first program and/or first application and/or service program and/or service application from the first network function.

It should be noted that the second request sent by the first terminal is forwarded by the CMF to the second network function. The second network function may return a second response to the first terminal. In the case that the second network function obtains the corresponding first program and/or first application and/or service program and/or service application, the second response carries the first program and/or the first application and/or the service program and/or the service application. In the case that the second network function fails to obtain the first program and/or first application and/or service program and/or service application, the second response may indicate that the corresponding first program and/or first application and/or service program and/or service application does not exist, or the download fails, or the response to the second request is refused.

In an embodiment, the delivering, to the first terminal, the first program and/or the first application and/or the service program and/or the service application includes at least one of the followings:
delivering, to the first terminal, the first program and/or the first application and/or the service program and/or the service application that is stored locally; or
sending the second request to the first network function, and forwarding to the first terminal the first program and/or the first application and/or the service program and/or the service application delivered by the first network function.

Upon receiving the second request, the second network function searches locally for the corresponding first program and/or first application and/or service program and/or service application based on the information carried in the second request.

In the case that the corresponding first program and/or first application is found locally, it indicates that the corresponding first program and/or first application is stored locally. In this case, the second network function may deliver the locally stored first program and/or first application and/or service program and/or service application to the first terminal.

In the case that the corresponding first program and/or first application and/or service program and/or service application is not found locally, it indicates that the corresponding first program and/or first application and/or service program and/or service application is not stored locally. In this case, the second network function forwards the received second request to the first network function, and upon receiving the corresponding first program and/or first application and/or service program and/or service application delivered by the first network function, it forwards the received first program and/or first application and/or service program and/or service application to the first terminal.

The corresponding first program and/or first application and/or service program and/or service application is not stored locally, which can be understood as that the first program and/or first application and/or service program and/or service application requested to be downloaded by the second request is not stored locally, or a version number of the first program and/or the first application and/or the service program and/or the service application stored locally is lower than the version number included in the software information carried by the second request.

In the case that the first program and/or first application and/or service program and/or service application sent by the first network function is not received, the second network function returns a second response to the first terminal, and the second response can indicate that the corresponding first program and/or first application and/or service program and/or service application does not exist, or the download fails, or the response to the second request is refused.

It should be noted that, in the case that the second network function receives the second response returned by the first network function, it forwards the received second response to the first terminal. The second response may carry the corresponding first program and/or first application and/or service program and/or service application, or the second response indicates that the corresponding first program and/or first application and/or service program and/or service application does not exist, or the download fails, or the response to the second request is refused.

It should be noted that the first request, the first response, the second request, the second response, the first DC catalogue, the data channel program, the data channel application, the service program, and the service application interacted between the second network function and the first terminal are all transmitted through the data channel established between the first terminal and the second network function.

Before the second network function transmits information to the first terminal through the data channel, it is necessary to first establish a data channel between the first terminal and the second network function. Based on this, in an embodiment, before receiving the first request sent by the first terminal, the method further includes:
receiving second information sent by the first network function;
establishing a data channel between the second network function and the first terminal based on the second information, and returning a data channel negotiation result to the first network function; wherein
the second information is sent based on a data channel establishment request sent by the first terminal, and the data channel establishment request is used to request to establish a data channel; the second information is used to instruct the second network function to establish a data channel between the second network function and the first terminal, and to instruct the second network function to reserve data channel media resource for the data channel.

The second network function receives the second information sent by the first network function through the MMTEL AS, and returns the data channel negotiation result to the first network function through the MMTEL AS.

The data channel negotiation result indicates the negotiation result of the data channel between the second network function and the first terminal, and may include data channel resource of the data channel, and may also include a corresponding IP address, port, etc.

In the case that the first device includes a first terminal and a second network function, the first terminal can directly send a first request to the first network function, and the first request sent by the first terminal can also be forwarded to the first network function by the second network function. Therefore, Embodiments of the present disclosure further provide a message interaction method, applied to a first terminal. The first terminal includes a mobile phone, a tablet computer, a laptop computer, a desktop computer, a wearable device, etc. As shown in FIG. 3, the method includes the following steps.

Step 301: sending a first request to a first network function and/or a second network function, wherein the first request is used to obtain a first Data Channel (DC) catalogue.

The first terminal creates a first request, and sends the first request to the first network function and/or the second network function.

It should be noted that the first terminal can send the first request to the second network function through the CMF.

Step 302: receiving a first response returned by the first network function and/or the second network function.

The first response indicates that the first DC catalogue is not returned, or the first response carries the first DC catalogue; wherein the first DC catalogue is created by the first network function based at least on first information, and includes information related to a data channel program and/or a data channel application and/or a data channel service; the first information includes at least one of subscription information, terminal information, information carried in the first request, or user information.

After sending the first request to the second network function, the first terminal can receive a first response returned by the second network function. The first response can be created by the first network function or by the second network function. The first response created by the first network function is forwarded to the first terminal by the second network function.

After sending the first request to the first network function, the first terminal may receive a first response directly returned by the first network function.

In an embodiment, the first DC catalogue includes at least one of the following information related to the data channel program and/or the data channel application and/or the data channel service:
an identifier;
a priority level;
software information;
an auto trigger attribute; or
user information.

The software information includes software version information; the user information includes at least a user number, and the user number may include at least one of the MSISDN, the IMPI or the IMPU.

In an embodiment, the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

In an embodiment, the subscription information includes at least one of the followings:
data channel subscription information;
data channel service subscription information;
data channel application subscription information;
service subscription information;
user subscription information;
a data channel program allowed to use;
a data channel service allowed to use;
a data channel application allowed to use; or
data channel authorization information.

In an embodiment, the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

In an embodiment, the terminal information includes at least one of the followings:
data channel capability information of a terminal; or
terminal type information.

In an embodiment, the information carried in the first request includes at least one of the followings:
data channel information; or
the user information.

The user information includes the user information of the calling user and/or the called user. For example, the user information includes a user number of the calling user and/or the called user, and the user number may include at least one of the MSISDN, the IMPI or the IMPU.

In an embodiment, the user information at least includes a user number.

After receiving the first DC catalogue, the first terminal may request the second network function to download any data channel program and/or data channel application and/or service program and/or service application in the first DC catalogue. Based on this, in an embodiment, the method further includes:
sending a second request to the second network function based on the first DC catalogue; wherein the second request is used to request downloading of a first program and/or a first application and/or a service program and/or a service application;
receiving the first program and/or the first application and/or the service program and/or the service application delivered by the second network function.

The second request carries at least the identifier of the first program and/or the first application and/or the service program and/or the service application, and may also carry the software information of the first program and/or the first application and/or the service program and/or the service application. The first program may be understood as any data channel program in the first DC catalogue, and the first application may be understood as any data channel application in the first DC catalogue.

The second request may be automatically triggered by the first terminal, and the first program and/or the first application and/or the service program and/or the service application may be decided by the auto trigger attribute in the first DC catalogue. In other words, the first program and/or the first application and/or the service program and/or the service application may be a data channel application or data channel program that supports auto triggered downloads in the first DC catalogue, or an application or program related to the data channel service.

The second request may also be manually triggered by the user of the first terminal. In this case, the first program and/or the first application and/or the service program and/or the service application may be selected or specified by the user.

It should be noted that after sending the second request to the second network function, the first terminal can receive a second response returned by the network function. The second response can carry the first program and/or the first application and/or the service program and/or the service application; or, the second response may indicate that the corresponding first program and/or first application and/or service program and/or service application does not exist, or the download fails, or the response to the second request is refused. The second response can be created by the first network function or by the second network function. The second response created by the first network function is forwarded to the first terminal by the second network function.

In the case that the first DC catalogue includes an auto trigger attribute, in an embodiment, the method further includes:
deciding whether to automatically send the second request to the second network function based on an auto trigger attribute included in the first DC catalogue.

The first terminal can decide whether there are the data channel service and/or the data channel program and/or the data channel application that support auto triggered downloads based on the auto trigger attribute included in the first DC catalogue; when there are the data channel service and/or the data channel program and/or the data channel application that support auto triggered downloads, the first terminal automatically sends the second request to the second network function based on the data channel service and/or the data channel program and/or the data channel application that support auto triggered downloads.

The first terminal may also, upon obtaining the first program and/or first application and/or service program and/or service application that needs to be downloaded, decide the auto trigger attribute of the first program and/or the first application and/or the service program and/or the service application within the first DC catalogue, and based on the decided auto trigger attribute, decide whether to automatically send the second request to the second network function. When the decided auto trigger attribute indicates support for automatic download, the first terminal automatically sends the second request to the second network function. When the decided auto trigger attribute does not support automatic download, the first terminal sends the second request to the second network function upon detecting a download request triggered by the user of the first terminal. In this case, the second request is triggered by the operation input by the user on the first terminal. For example, after selecting the first program and/or the first application and/or the service program and/or the service application based on the first DC catalogue, the user clicks the download option to trigger the first terminal to send the second request.

It should be noted that the first request, the first response, the first DC catalogue, the second request, the second response, the data channel program, the data channel application, the service program, the service application, and the like interacted between the first terminal and the network function (first network function, second network function) are all transmitted through the data channel established between the first terminal and the network function.

Before transmitting information through the data channel between the first terminal and the network function, it is necessary to first establish a data channel between the first terminal and the network function. Based on this, in an embodiment, before sending the first request to the first network function and/or the second network function, the method includes:
sending a data channel establishment request to the first network function;
receiving a response to the data channel establishment request; wherein the response to the data channel establishment request is returned by the first network function, and carries a data channel negotiation result.

The first terminal initiates a data channel establishment request to the first network function, and receives a response to the data channel establishment request returned by the first network function. The data channel establishment request may carry user information and/or terminal information and/or data channel information of the first terminal; the user information at least includes a user number, such as the MSISDN, the IMPU, the IMPI, etc. The terminal information includes the data channel capability information of the terminal, and/or the terminal type information. The data channel information includes data channel capability information.

The data channel negotiation result indicates the negotiation result of the data channel between the second network function and the first terminal, and may include data channel resource of the data channel, and may also include a corresponding IP address, port, etc.

Before creating the first DC catalogue based on the first information, it is necessary for the first network function to obtain the subscription information and/or user information included in the first information from a server, and to obtain the data channel program and/or the data channel application and/or the data channel service. Therefore, Embodiments of the present disclosure further provide a message interaction method, applied to a server. The server includes a server running a BOSS and/or a management platform, and/or a data channel application server. As shown in FIG. 4, the method includes the following steps.

Step 401: receiving a data channel program and/or a data channel application and/or a data channel service uploaded by a second terminal.

The second terminal can be understood as a terminal used by a developer. The developer can use the second terminal, based on a web portal, to upload the data channel program and/or the data channel application and/or the data channel service.

The server may provide a user interface for login, authentication, and information upload. The developer may log in to the server through a login interface and an authentication interface, and upload a data channel program and/or a data channel application and/or a data channel service through an interface for the user to upload information.

The data channel program uploaded by the server carries information related to the data channel program, for example, the data channel program carries an identifier, a priority level, software information, an auto trigger attribute, user information, and the like of the data channel program. The data channel application uploaded by the server carries information related to the corresponding application; the data channel service uploaded by the server carries information related to the corresponding service.

Step 402: sending, to a first network function, the data channel program and/or data channel application and/or data channel service that is verified or approved.

The verified or approved data channel program and/or data channel application and/or data channel service is used by the first network function to, upon receiving a first request, decide, based at least on the first information, whether to return the first DC catalogue and/or create the first DC catalogue and/or return the first DC catalogue; the first request is used to obtain the first DC catalogue; the first DC catalogue includes information related to the data channel program and/or the data channel application and/or the data channel service; the first information includes at least one of subscription information, terminal information, information carried in the first request, or user information.

The server performs content review or verification on the received data channel program and/or data channel application and/or data channel service to obtain a verification result and/or a review result.

The server may return the corresponding verification result or review result to the second terminal for each data channel program and/or data channel application and/or data channel service, and send the verified or approved data channel program and/or data channel application and/or data channel service to the first network function for storage.

In the case that any data channel program and/or data channel application and/or data channel service fails the review or verification, the server rej ects further upload of the data channel program and/or the data channel application and/or the data channel service, and notifies the second terminal that the corresponding data channel program and/or data channel application and/or data channel service fails the review or verification.

It should be noted that the server can synchronously update, to the first network function, the data channel program and/or data channel application and/or data channel service that is verified or approved, enabling the first network function to update the first DC catalogue and thereby improve the accuracy of the information in the first DC catalogue.

It should be noted that the server can call a built-in validation function to implement step 401 and step 402.

To facilitate accurate determination by the first network function on whether to return the first DC catalogue and/or create the first DC catalogue, in an embodiment, the method further includes: sending the subscription information and/or the user information to the first network function.

In an embodiment, the first DC catalogue includes at least one of the following information related to the data channel program and/or the data channel application and/or the data channel service:
an identifier;
a priority level;
software information;
an auto trigger attribute; or
user information.

In an embodiment, the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

In an embodiment, the subscription information includes at least one of the followings:
data channel subscription information;
data channel service subscription information;
data channel application subscription information;
service subscription information;
user subscription information;
a data channel program allowed to use;
a data channel service allowed to use;
a data channel application allowed to use; or
data channel authorization information.

In an embodiment, the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

In an embodiment, the terminal information includes at least one of the followings:
data channel capability information of a terminal; or
terminal type information.

In an embodiment, the information carried in the first request includes at least one of the followings:
data channel information; or
the user information.

In an embodiment, the user information at least includes a user number.

The following takes the example of the first terminal sending the first request to the first network function through the second network function as an example, and further describes the embodiments of the present disclosure in conjunction with an interaction diagram.

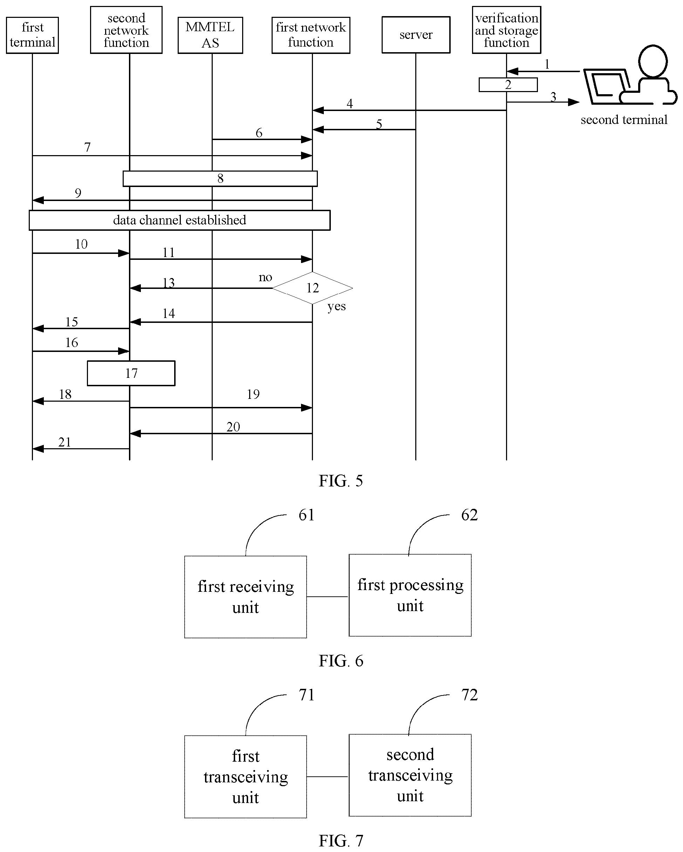

As shown in FIG. 5, a message interaction method includes the following steps.

Step 1: a verification and storage function receives a data channel program and/or a data channel application and/or a data channel service uploaded by a second terminal.

The verification and storage function may be integrated into a server or may be configured separately from the server. The server may be a server for running a BOSS system or a data channel application server.

For example, the developer uses the second terminal, based on a Web portal, to upload the data channel program and/or data channel application and/or data channel service to the verification and storage function.

Step 2: the verification and storage function receives the data channel program and/or data channel application and/or data channel service uploaded by the second terminal.

The verification and storage function performs content review or verification on the received data channel program and/or data channel application and/or data channel service to obtain a verification result and/or a review result.

Step 3: the verification and storage function returns the verification result and/or review result to the second terminal.

The verification and storage function can return a corresponding verification result or review result to the second terminal for each data channel program and/or data channel application and/or data channel service.

In the case that any data channel program and/or data channel application and/or data channel service fails the review or verification, the server rej ects further upload of the data channel program and/or data channel application and/or data channel service, and notifies the second terminal that the corresponding data channel program and/or data channel application and/or data channel service fails the review or verification.

Step 4: the verification and storage function sends the verified or approved data channel program and/or data channel application and/or data channel service to the first network function.

The server may synchronously update, to the first network function, the data channel program and/or data channel application and/or data channel service that is verified or approved.

The first network function receives the data channel program and/or data channel application and/or data channel service sent by the verification and storage function, and can perform revalidation on the data channel program and/or the data channel application and/or the data channel service, and locally save the verified data channel program and/or data channel application and/or data channel service. For example, the first network function can verify an identifier and a version number, and the like of the data channel program and/or the data channel application and/or the data channel service.

Step 5: the server sends the subscription information and/or the user information to the first network function, and the first network function receives the subscription information and/or the user information sent by the server.

The subscription information and/or user information is obtained by the server from information submitted by the user when activating the service. The first network function may be an MRCF, a DCCF, a DCSF, a DCSF, a DCAR or a DCARS.

Step 6: the MMTEL AS sends the data channel service subscription information and/or the user information to the first network function, and the first network function receives the data channel service subscription information and/or the user information sent by the MMTEL AS. The data channel service subscription information and/or the user information may be carried in a registration request sent by the MMTEL AS to the first network function, and the registration request is used to register the data channel service. The data channel service subscription information may include a service attribute, and the service attribute includes a data channel service ID (Service ID) and/or an auto trigger attribute.

Step 7: the first terminal sends a data channel establishment request to the first network function, and the first network function receives the data channel establishment request sent by the first terminal.

The data channel establishment request is used to request the establishment of a data channel.

Step 8: the first network function establishes a data channel between the first network function and the second network function, and sends the second information to the second network function through the MMTEL AS.

The second information is used to instruct the second network function to establish a data channel between the second network function and the first terminal, and is used to instruct the second network function to reserve data channel media resource for the data channel.

Upon receiving the second information, the second network function establishes, based on the second information, a data channel between the second network function and the first terminal, and returns a data channel negotiation result to the first network function.

The second network function may be a DCMF, an MRS, a DCMF or a DCM.

Step 9: the first network function returns a response to the data channel establishment request to the first terminal.

The response to the data channel establishment request includes the data channel negotiation result.

Step 10: the first terminal sends a first request to the second network function, and the second network function receives the first request sent by the first terminal.

The first terminal may send the first request to the CMF, and the CMF forwards the received first request to the second network function. The first request is used to obtain a first DC catalogue. The first request is transmitted through the data channel between the first terminal and the second network function.

Step 11: the second network function sends a first request to the first network function, and the first network function receives the first request sent by the second network function.

Step 12: the first network function decides whether to return the first DC catalogue and/or create the first DC catalogue and/or return the first DC catalogue based at least on the first information.

The first network function decides whether to return the first DC catalogue based at least on the first information to obtain a first determination result. The first network function returns a first response to the first terminal based on the first determination result. The first response indicates that the first DC catalogue is not returned, or the first response carries the first DC catalogue.

In the case that the first determination result indicates that the first DC catalogue is not returned, step 13 is executed.

In the case that the first determination result indicates that the first DC catalogue is returned, step 14 is executed.

Step 13: the first network function returns a first response to the first terminal, and the first response indicates that the first DC catalogue is not returned.

Step 14: the first DC catalogue is created and/or returned based at least on the first information.

The first response returned by the first network function to the second network function carries the first DC catalogue.

The first DC catalogue includes information related to the data channel program and/or the data channel application and/or the data channel service. The first information includes at least one of subscription information, terminal information, information carried in the first request, or user information.

In an embodiment, the first DC catalogue includes at least one of the following information related to the data channel program and/or the data channel application and/or the data channel service:
an identifier;
a priority level;
software information;
an auto trigger attribute; or
user information.

In an embodiment, the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

In an embodiment, the subscription information includes at least one of the followings:
data channel subscription information;
data channel service subscription information;
data channel application subscription information;
service subscription information;
user subscription information;
a data channel program or data channel programs that are allowed to use;
a data channel service or data channel services that are allowed to use;
a data channel application or data channel applications that are allowed to use; or
data channel authorization information.

In an embodiment, the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

In an embodiment, the terminal information includes at least one of the followings:
data channel capability information of a terminal; or
terminal type information.

In an embodiment, the information carried in the first request includes at least one of the followings:
data channel information; or
the user information.

In an embodiment, the user information at least includes a user number.

Step 15: the second network function returns the received first response to the first terminal, and the first terminal receives the first response returned by the second network function.

The second network function may return the first response to the first terminal through the CMF.

Step 16: in the case that the first response carries the first DC catalogue, the first terminal sends a second request to the second network function.

The first terminal may send a second request to the CMF, and the CMF forwards the received second request to the second network function. The second request is used to request the downloading of a first program and/or a first application and/or a service program and/or a service application. The second request carries at least the identifier of the first program and/or the first application, and may also carry the software information of the first program and/or the first application and/or the service program and/or the service application. The second request may also be used to request the downloading of a boot program of the first application and/or the first program and/or the service program and/or the service application.

The second request may be automatically triggered by the first terminal, or may be manually triggered by a user of the first terminal.

In an embodiment, before the first terminal sends the second request to the second network function, the method further includes:
the first terminal decides whether to automatically send the second request to the second network function based on an auto trigger attribute included in the first DC catalogue.

Step 17: the second network function receives the second request sent by the first terminal, and decides whether the corresponding first program and/or first application and/or service program and/or service application is stored locally based on the second request.

In the case that the corresponding first program and/or first application and/or service program and/or service application is stored locally, step 18 is executed. In the case that the corresponding first program and/or first application and/or service program and/or service application is not stored locally, steps 19 to 21 are executed.

The corresponding first program and/or first application and/or service program and/or service application is not stored locally, which can be understood as the first program and/or the first application and/or the service program and/or the service application requested to be downloaded by the second request is not stored locally, or a version number of the first program and/or the first application and/or the service program and/or the service application stored locally is lower than the version number included in the software information carried by the second request.

Step 18: the second network function delivers the locally stored first program and/or first application and/or service program and/or service application to the first terminal.

The second network function may send the locally stored first program and/or first application and/or service program and/or service application to the first terminal through the CMF.

Step 19: the second network function forwards the received second request to the first network function.

Step 20: the first network function receives the second request sent by the second network function, and sends a first program and/or a first application and/or a service program and/or a service application correspondingly to the second network function.

In the case that the second request is further used to request downloading of the boot program for the first application and/or the first program and/or the service program and/or the service application, the first network function also returns the corresponding boot program to the first terminal through the second network function.

Step 21: the second network function forwards the received first program and/or first application and/or service program and/or service application to the first terminal, and the first terminal receives the first program and/or the first application and/or the service program and/or the service application sent by the second network function.

The second network function may forward the received first program and/or first application and/or service program and/or service application to the first terminal through the CMF.

In the message interaction method, apparatus, network function, related device and storage medium provided in the embodiments of the present disclosure, the first terminal sends a first request to the first network function and/or the second network function, and the first request is used to obtain the first DC catalogue information; the second network function receives the first request sent by the first terminal and sends the first request to the first network function; the first network function receives the first request sent by the first terminal and/or the second network function, and decides whether to return the first DC catalogue and/or create the first DC catalogue and/or return the first DC catalogue based at least on the first information; the first information includes at least one of subscription information, terminal information, information carried in the first request, or user information; the second network function receives the first response returned by the first network function and sends the first response to the first terminal; wherein the first response indicates that the first DC catalogue is not returned, or the first response carries the first DC catalogue; the first DC catalogue information includes information related to the data channel program and/or the data channel application and/or the data channel service. In the above solutions, the first network function can decide whether to return the first DC catalogue based at least on the first information. When it is decided that the DC catalogue needs to be returned, the first network function can create and/or return the first DC catalogue based at least on the first information. As a result, the first DC catalogue can be exchanged between the network side and the terminal side, enabling the terminal to download a program and/or an application based on the acquired first DC catalogue, thereby realizing the downloading of the data channel program and/or the data channel applications. Additionally, since the first DC catalogue includes information related to the data channel program and/or the data channel application and/or the data channel service, the first network function can obtain information related to the data channel program and/or the data channel application and/or the data channel service, thereby realizing the uploading of the data channel programs and/or the data channel applications.

To implement the message interaction method of the embodiments of the present disclosure, embodiments of the present disclosure further provide a message interaction apparatus, which is configured on the first network function. As shown in FIG. 6, the apparatus includes:
a first receiving unit 61, configured to receive a first request sent by a first device, wherein the first request is used to obtain a first DC catalogue;
a first processing unit 62, configured to decide, based at least on the first information, whether to return the first DC catalogue and/or create the first DC catalogue and/or return the first DC catalogue; wherein the first information includes at least one of subscription information, terminal information, information carried in the first request, or user information; the first DC catalogue includes information related to the data channel program and/or the data channel application and/or the data channel service.

In an embodiment, the first DC catalogue includes at least one of the following information related to the data channel program and/or the data channel application and/or the data channel service:
an identifier;
a priority level;
software information;
an auto trigger attribute; or
user information.

In an embodiment, the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

In an embodiment, the subscription information includes at least one of the followings:
data channel subscription information;
data channel service subscription information;
data channel application subscription information;
service subscription information;
user subscription information;
a data channel program or data channel programs that are allowed to use;
a data channel service or data channel services that are allowed to use;
a data channel application or data channel applications that are allowed to use; or
data channel authorization information.

In an embodiment, the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

In an embodiment, the terminal information includes at least one of the followings:
data channel capability information of a terminal; or
terminal type information.

In an embodiment, the information carried in the first request includes at least one of the followings:
data channel information; or
the user information.

In an embodiment, the user information at least includes a user number.

In an embodiment, the first processing unit 62 is specifically configured to:
create the first DC catalogue and/or return the first DC catalogue in the case that at least one of the following conditions is met:
the data channel program or the data channel programs are allowed and/or supported to use;
the data channel service or the data channel services are allowed and/or supported to use; or
the data channel application or the data channel applications are allowed and/or supported to use.

In an embodiment, the first processing unit 62 is further configured to:
not create the first DC catalogue and/or not return the first DC catalogue in the case that at least one of the following conditions is met:
the data channel program or the data channel programs are not allowed and/or not supported to use;
the data channel service or the data channel services are not allowed and/or not supported to use; or
the data channel application or the data channel applications are not allowed and/or not supported to use.

In an embodiment, the first device includes a second network function and/or a first terminal; the apparatus further includes:
a fourth receiving unit, configured to receive a second request sent by the second network function; the second request is sent by the first terminal and is configured to request downloading of a first program and/or a first application and/or a service program and/or a service application;
a third sending unit, configured to deliver the first program and/or the first application and/or the service program and/or the service application to the second network function.

In an embodiment, the first device includes a first terminal; the apparatus further includes:
a fifth receiving unit, configured to receive a data channel establishment request sent by the first terminal;
a fourth sending unit, configured to return a response to the data channel establishment request to the second network function; wherein the response to the data channel establishment request carries a data channel negotiation result.

In an embodiment, the apparatus further includes:
a sixth receiving unit, configured to receive the data channel program and/or the data channel application and/or the data channel uploaded by a server; wherein,
the uploaded data channel program and/or data channel application and/or data channel has been verified or approved.

In an embodiment, the apparatus further includes:
a seventh receiving unit, configured to receive the subscription information and/or the user information sent by a server.

In practical applications, the first receiving unit 61, the third sending unit, the fourth sending unit, the fourth receiving unit, the fifth receiving unit, the sixth receiving unit and the seventh receiving unit can be implemented by a communication interface in the message interaction apparatus, and the first processing unit 62 can be implemented by a processor in the message interaction apparatus in combination with the communication interface.

It should be noted that the message interaction apparatus provided in the above embodiments only uses the division of the above program modules as an example when performing message interaction. In practical applications, the above processing can be assigned to different program modules as needed, that is, an internal structure of the apparatus is divided into different program modules to complete all or part of the processing described above. In addition, the message interaction apparatus provided in the above embodiments shares the same inventive concept as the message interaction method embodiments at the first network function side. The specific implementation processes thereof are detailed in the method embodiments, which will not be repeated herein.

To implement the message interaction method of the embodiments of the present disclosure, embodiments of the present disclosure further provide a message interaction apparatus, which is configured on the second network function. As shown in FIG. 7, the apparatus includes:
a first transceiver unit 71, configured to receive a first request sent by a first terminal, and send a first request to a first network function; the first request is used to obtain a first DC catalogue;
a second transceiver unit 72, configured to receive a first response returned by the first network function and send the first response to the first terminal; wherein
the first response indicates that the first DC catalogue is not returned, or the first response carries the first DC catalogue; wherein the first DC catalogue is created based at least on first information, and includes information related to a data channel program and/or a data channel application and/or a data channel service; the first information includes at least one of terminal information, information carried in the first request, or user information.

In an embodiment, the first DC catalogue includes at least one of the following information related to the data channel program and/or the data channel application and/or the data channel service:
an identifier;
a priority level;
software information;
an auto trigger attribute; or
user information.

In an embodiment, the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

In an embodiment, the subscription information includes at least one of the followings:
data channel subscription information;
data channel service subscription information;
data channel application subscription information;
service subscription information;
user subscription information;
a data channel program or data channel programs that are allowed to use;
a data channel service or data channel services that are allowed to use;
a data channel application or data channel applications that are allowed to use; or
data channel authorization information.

In an embodiment, the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

In an embodiment, the terminal information includes at least one of the followings:
data channel capability information of a terminal; or
terminal type information.

In an embodiment, the information carried in the first request includes at least one of the followings:
data channel information; or
the user information.

In an embodiment, the user information at least includes a user number.

In an embodiment, the apparatus further includes:
a third transceiver unit, configured to receive a second request sent by the first terminal in the case that the first response carries the first DC catalogue; wherein the second request is used to request downloading of a first program and/or a first application and/or a service program and/or a service application;
a fourth transceiver unit, configured to deliver the first program and/or the first application and/or the service program and/or the service application to the first terminal.

In an embodiment, the third transceiver unit is specifically configured to perform at least one of the followings:
delivering, to the first terminal, the first program and/or the first application and/or the service program and/or the service application that is stored locally; or
sending the second request to the first network function, and forwarding to the first terminal the first program and/or the first application and/or the service program and/or the service application delivered by the first network function.

In practical applications, the first transceiver unit 71, the second transceiver unit 72, the third transceiver unit, and the fourth transceiver unit may be implemented by a communication interface in the message interaction apparatus.

It should be noted that the message interaction apparatus provided in the above embodiments only uses the division of the above program modules as an example when performing message interaction. In practical applications, the above processing can be assigned to different program modules as needed, that is, an internal structure of the apparatus is divided into different program modules to complete all or part of the processes described above. In addition, the message interaction apparatus provided in the above embodiment shares the same inventive concept as the message interaction method embodiments at the second network function side. The specific implementation processes are detailed in the method embodiments, which will not be repeated here.

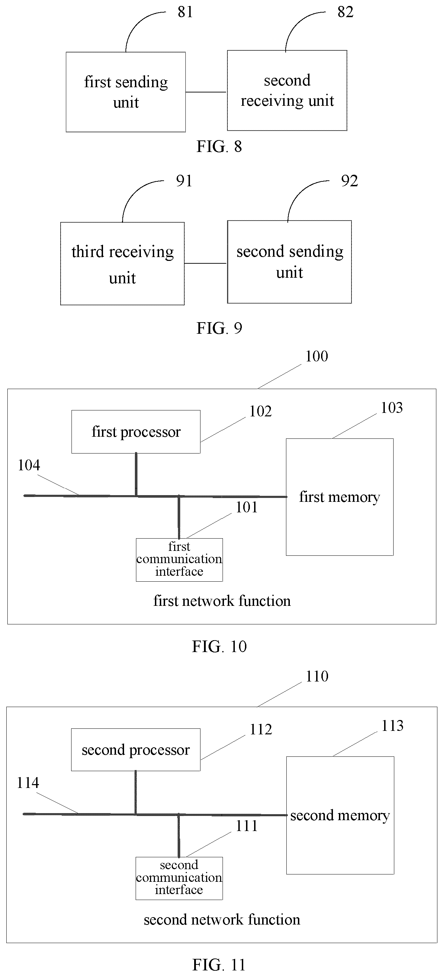

To implement the message interaction method of the embodiments of the present disclosure, embodiments of the present disclosure further provide a message interaction apparatus, which is configured on the first terminal. As shown in FIG. 8, the apparatus includes:
a first sending unit 81, configured to send a first request to the first network function and/or the second network function, wherein the first request is used to obtain a first DC catalogue;
a second receiving unit 82, configured to receive a first response returned by the first network function and/or the second network function; wherein
the first response indicates that the first DC catalogue is not returned, or the first response carries the first DC catalogue; wherein the first DC catalogue is created by the first network function based at least on first information, and includes information related to a data channel program and/or a data channel application and/or a data channel service; the first information includes at least one of subscription information, terminal information, information carried in the first request, or user information.

In an embodiment, the first DC catalogue includes at least one of the following information related to the data channel program and/or the data channel application and/or the data channel service:
an identifier;
a priority level;
software information;
an auto trigger attribute; or
user information.

In an embodiment, the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

In an embodiment, the subscription information includes at least one of the followings:
data channel subscription information;
data channel service subscription information;
data channel application subscription information;
service subscription information;
user subscription information;
a data channel program or data channel programs that are allowed to use;
a data channel service or data channel services that are allowed to use;
a data channel application or data channel applications that are allowed to use; or
data channel authorization information.

In an embodiment, the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

In an embodiment, the terminal information includes at least one of the followings:
data channel capability information of a terminal; or
terminal type information.

In an embodiment, the information carried in the first request includes at least one of the followings:
data channel information; or
the user information.

In an embodiment, the user information at least includes a user number.

In an embodiment, the apparatus further includes:
a fifth sending unit, configured to send a second request to the second network function based on the first DC catalogue; the second request is used to request downloading of a first program and/or a first application and/or a service program and/or a service application;
an eighth receiving unit, configured to receive the first program and/or the first application and/or the service program and/or the service application delivered by the second network function.

In an embodiment, the apparatus further includes:
a determination unit, configured to decide whether to automatically send a second request to the second network function based on the auto trigger attribute included in the first DC catalogue.

In an embodiment, the apparatus further includes:
a sixth sending unit, configured to send a data channel establishment request to the first network function;
a ninth receiving unit, configured to receive a response to the data channel establishment request returned by the first network function; wherein the response to the data channel establishment request carries a data channel negotiation result.

In practical applications, the first sending unit 81, the second receiving unit 82, the fifth sending unit, the sixth sending unit, the eighth receiving unit and the ninth receiving unit can be implemented by a communication interface in the message interaction apparatus; the determination unit can be implemented by a processor in the message interaction apparatus.

It should be noted that the message interaction apparatus provided in the above embodiments only uses the division of the above program modules as an example when performing message interaction. In practical applications, the above processing can be assigned to different program modules as needed, that is, an internal structure of the apparatus is divided into different program modules to complete all or part of the processing described above. In addition, the message interaction apparatus provided in the above embodiments shares the same inventive concept as the message interaction method embodiments at the first terminal side. The specific implementation process is detailed in the method embodiments, which will not be repeated herein.

To implement the message interaction method of the embodiments of the present disclosure, embodiments of the present disclosure further provide a message interaction apparatus, which is configured on a server. As shown in FIG. 9, the apparatus includes:
a third receiving unit 91, configured to receive the data channel program and/or data channel application and/or data channel service uploaded by the second terminal;
a second sending unit 92, configured to send, to the first network function, the data channel program and/or data channel application and/or data channel service that is verified or approved;
wherein the verified or approved data channel program and/or data channel application and/or data channel service is used by the first network function to, upon receiving a first request, decide, based at least on the first information, whether to return the first DC catalogue and/or create the first DC catalogue and/or return the first DC catalogue; the first request is used to obtain the first DC catalogue; the first DC catalogue includes information related to the data channel program and/or the data channel application and/or the data channel service; the first information includes at least one of the terminal information, the information carried in the first request, or the user information.

In an embodiment, the apparatus further includes:
the seventh sending unit, configured to send the subscription information and/or the user information to the first network function.

In an embodiment, the first DC catalogue includes at least one of the following information related to the data channel program and/or the data channel application and/or the data channel service:
an identifier;
a priority level;
software information;
an auto trigger attribute; or
user information.

In an embodiment, the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

In an embodiment, the subscription information includes at least one of the followings:
data channel subscription information;
data channel service subscription information;
data channel application subscription information;
service subscription information;
user subscription information;
a data channel program or data channel programs that are allowed to use;
a data channel service or data channel services that are allowed to use;
a data channel application or data channel applications that are allowed to use; or
data channel authorization information.

In an embodiment, the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

In an embodiment, the terminal information includes at least one of the followings:
data channel capability information of the terminal;
terminal type information.

In an embodiment, the information carried in the first request includes at least one of the followings:
data channel capability information of a terminal; or
terminal type information.

In an embodiment, the user information at least includes a user number.

In practical applications, the third receiving unit 91, the second sending unit 92 and the seventh sending unit can be implemented by a communication interface in the message interaction apparatus.

It should be noted that the message interaction apparatus provided in the above embodiments only uses the division of the above program modules as an example when performing message interaction. In practical applications, the above processes can be assigned to different program modules as needed, that is, an internal structure of the apparatus is divided into different program modules to complete all or part of the processing described above. In addition, the message interaction apparatus provided in the above embodiments shares the same inventive concept as the message interaction method embodiments at the server side. The specific implementation processes are detailed in the method embodiments, which will not be repeated herein.

Based on the hardware implementation of the above program modules, and in order to implement the method on the first network function side in the embodiments of the present disclosure, embodiments of the present disclosure further provide a first network function, as shown in FIG. 10, the first network function 100 includes:
a first communication interface 101, configured to exchange information with other network nodes;
a first processor 102, connected to the first communication interface 101 to enable information exchange with other network nodes, and configured to, when executing a computer program, perform the method provided by one or more technical solutions at the first network function side. The computer program is stored in a first memory 103.

Specifically, the first communication interface 101 is configured to receive a first request sent by a first device, wherein the first request is used to obtain a first DC catalogue;
the first processor 102 is configured to, based at least on first information, decide whether to return the first DC catalogue and/or create the first DC catalogue and/or return the first DC catalogue; wherein the first information includes at least one of subscription information, terminal information, information carried in the first request, or user information; the first DC catalogue includes information related to a data channel program and/or a data channel application and/or a data channel service.

In an embodiment, the first DC catalogue includes at least one of the following information related to the data channel program and/or the data channel application and/or the data channel service:
an identifier;
a priority level;
software information;
an auto trigger attribute; or
user information.

In an embodiment, the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

In an embodiment, the subscription information includes at least one of the followings:
data channel subscription information;
data channel service subscription information;
data channel application subscription information;
service subscription information;
user subscription information;
a data channel program or data channel programs that are allowed to use;
a data channel service or data channel services that are allowed to use;
a data channel application or data channel applications that are allowed to use; or
data channel authorization information.

In an embodiment, the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

In an embodiment, the terminal information includes at least one of the followings:
data channel capability information of a terminal; or
terminal type information.

In an embodiment, the information carried in the first request includes at least one of the followings:
data channel information; or
the user information.

In an embodiment, the user information at least includes a user number.

In an embodiment, the first processor 102 is specifically configured to:
create the first DC catalogue and/or return the first DC catalogue in the case that at least one of the following conditions is met:
the data channel program or the data channel programs are allowed and/or supported to use;
the data channel service or the data channel services are allowed and/or supported to use; or
the data channel application or the data channel applications are allowed and/or supported to use.

In an embodiment, the first processor 102 is further configured to:
not create the first DC catalogue and/or not return the first DC catalogue in the case that at least one of the following conditions is met:
the data channel program or the data channel programs are not allowed and/or not supported to use;
the data channel service or the data channel services are not allowed and/or not supported to use; or
the data channel application or the data channel applications are not allowed and/or not supported to use.

In an embodiment, the first device includes a second network function and/or a first terminal; the first communication interface 101 is further configured to:
receive a second request sent by the second network function; the second request is sent by the first terminal and is used to request downloading of a first program and/or a first application and/or a service program and/or a service application;
deliver the first program and/or the first application and/or the service program and/or the service application to the second network function.

In an embodiment, the first device includes a first terminal; the first communication interface 101 is further configured to:
receive a data channel establishment request sent by the first terminal;
return, to the first terminal, a response to the data channel establishment request; wherein the response to the data channel request carries a data channel negotiation result.

In an embodiment, the first communication interface 101 is further configured to: receive a data channel program and/or a data channel application and/or a data channel uploaded by a server; wherein
the uploaded data channel program and/or data channel application and/or data channel has been verified or approved.

In an embodiment, the first communication interface 101 is further configured to:
receive the subscription information and/or the user information sent by a server.

It should be noted that a specific processing process of the first processor 102 and the first communication interface 101 can be understood by referring to the above method.

Obviously, in practical applications, the various components in the first network function 100 are coupled together through a bus system 104. It can be understood that the bus system 104 is used to realize the connection and communication between these components. In addition to the data bus, the bus system 104 further includes a power bus, a control bus and a status signal bus. However, for the sake of clarity, all buses are labeled as the bus system 104 in FIG. 10.

The first memory 103 in the embodiments of the present disclosure is used to store various types of data to support the operation of the first network function 100. Examples of such data include any computer program used to operate on the first network function 100.

The method disclosed in the embodiments of the present disclosure may be applied to or implemented by the first processor 102. The first processor 102 may be an integrated circuit chip with signal processing capabilities. During implementation, each step of the above method can be completed by an integrated logic circuit of hardware in the first processor 102 or in the form of software instructions. The above-mentioned first processor 102 may be a general-purpose processor, a Digital Signal Processor (DSP), or other programmable logic devices, discrete gates or transistor logic devices, discrete hardware components, etc. The first processor 102 can implement or execute the methods, steps and logic block diagrams disclosed in the embodiments of the present disclosure. The general-purpose processor may be a microprocessor or any conventional processor, etc. The steps of the method disclosed in the embodiments of the present disclosure may be directly executed by a hardware decoding processor, or executed by a combination of hardware and software modules in the decoding processor. The software module can be located in a storage medium, which is located in a first memory 103. The first processor 102 reads the information from the first memory 103 and completes the steps of the above method in combination with its hardware.

In an exemplary embodiment, the first network function 100 may be implemented by one or more Application Specific Integrated Circuits (ASICs), DSPs, Programmable Logic Devices (PLDs), Complex Programmable Logic Devices (CPLDs), Field Programmable Gate Arrays (FPGAs), general-purpose processors, controllers, Micro Controller Units (MCUs), microprocessors, or other electronic components to perform the aforementioned methods.

Based on the hardware implementation of the above program modules, and in order to implement the method at the second network function sides in the embodiments of the present disclosure, embodiments of the present disclosure further provide a second network function, as shown in FIG. 11, the second network function 110 includes:
a second communication interface 111, configured to exchange information with other network nodes;
a second processor 112, connected to the first communication interface 111 to enable information exchange with other network nodes, and configured to, when executing a computer program, perform the method provided by one or more technical solutions at the second network function side. The computer program is stored in a second memory 113.

Specifically, the second communication interface 111 is configured to:
receive a first request sent by a first terminal, and send the first request to a first network function; the first request is used to obtain a first DC catalogue;
receive a first response returned by the first network function, and send the first response to the first terminal; wherein
the first response indicates that the first DC catalogue is not returned, or the first response carries the first DC catalogue; wherein the first DC catalogue is created based at least on first information, and includes information related to a data channel program and/or a data channel application and/or a data channel service; the first information includes at least one of terminal information, information carried in the first request, or user information.

In an embodiment, the first DC catalogue includes at least one of the following information related to the data channel program and/or the data channel application and/or the data channel service:
an identifier;
a priority level;
software information;
an auto trigger attribute; or
user information.

In an embodiment, the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

In an embodiment, the subscription information includes at least one of the followings:
data channel subscription information;
data channel service subscription information;
data channel application subscription information;
service subscription information;
user subscription information;
a data channel program or data channel programs that are allowed to use;
a data channel service or data channel services that are allowed to use;
a data channel application or data channel applications that are allowed to use; or
data channel authorization information.

In an embodiment, the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

In an embodiment, the terminal information includes at least one of the followings:
data channel capability information of a terminal; or
terminal type information.

In an embodiment, the information carried in the first request includes at least one of the followings:
data channel information;
user information.

In an embodiment, the user information at least includes a user number.

In an embodiment, the second communication interface 111 is further configured to:
in the case that the first response carries the first DC catalogue, receive a second request sent by the first terminal; wherein the second request is used to request downloading a first program and/or a first application and/or a service program and/or a service application;
deliver the first program and/or the first application and/or the service program and/or the service application to the first terminal.

In an embodiment, the second communication interface 111 is specifically configured to perform at least one of the followings:
delivering, to the first terminal, the first program and/or the first application and/or the service program and/or the service application that is stored locally; or
sending the second request to the first network function, and forwarding to the first terminal the first program and/or the first application and/or the service program and/or the service application delivered by the first network function.

It should be noted that the specific processing process of the second processor 112 and the second communication interface 111 can be understood by referring to the above method.

Obviously, in practical applications, the various components in the second network function 110 are coupled together through a bus system 114. It can be understood that the bus system 114 is configured to realize the connection and communication between these components. In addition to the data bus, the bus system 114 further includes a power bus, a control bus and a status signal bus. However, for the sake of clarity, all buses are labeled as the bus system 114 in FIG. 11.

The second memory 113 in the embodiments of the present disclosure is used to store various types of data to support the operation of the second network function 110. Examples of such data include any computer program used to operate on the second network function 110.

The method disclosed in the embodiments of the present disclosure may be applied to or implemented by the second processor 112. The second processor 112 may be an integrated circuit chip with signal processing capabilities. During implementation, each step of the above method can be completed by an integrated logic circuit of hardware in the second processor 112 or in the form of software instructions. The above-mentioned second processor 112 may be a general-purpose processor, a DSP, or other programmable logic devices, discrete gates or transistor logic devices, discrete hardware components, etc. The second processor 112 can implement or execute the methods, steps and logic block diagrams disclosed in the embodiments of the present disclosure. The general-purpose processor may be a microprocessor or any conventional processor, etc. The steps of the method disclosed in the embodiments of the present disclosure may be directly executed by a hardware decoding processor, or executed by a combination of hardware and software modules in the decoding processor. The software module can be located in a storage medium, which is located in a second memory 113. The second processor 112 reads the information from the second memory 113 and completes the steps of the above method in combination with its hardware.

In an exemplary embodiment, the second network function 110 may be implemented by one or more ASICs, DSPs, PLDs, CPLDs, FPGAs, general-purpose processors, controllers, MCUs, microprocessors, or other electronic components to perform the aforementioned methods.

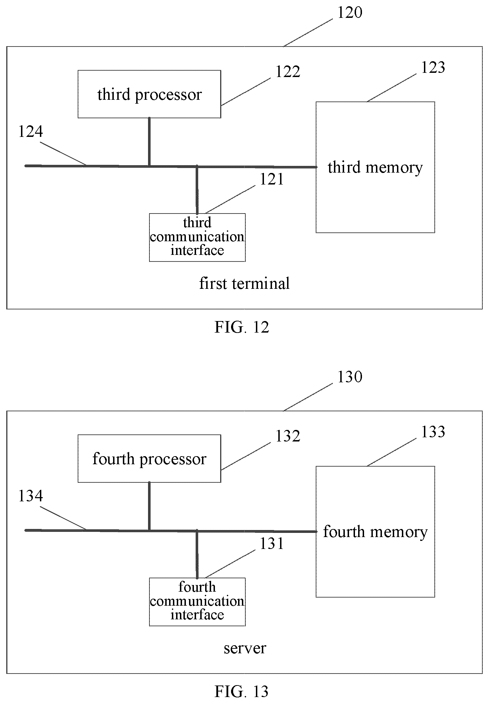

Based on the hardware implementation of the above program modules, and in order to implement the method at the first terminal side in the embodiments of the present disclosure, embodiments of the present disclosure further provide a first terminal, as shown in FIG. 12, the first terminal 120 includes:
a third communication interface 121, configured to exchange information with other network nodes;
a third processor 122, connected to the third communication interface 121 to enable information exchange with other network nodes, and configured to, when executing a computer program, perform the method provided by one or more technical solutions at the first terminal side. The computer program is stored in a third memory 123.

Specifically, the third communication interface 121 is configured to:
send a first request to the first network function and/or the second network function, wherein the first request is used to obtain a first DC catalogue;
receive a first response returned by the first network function and/or the second network function; wherein
the first response indicates that the first DC catalogue is not returned, or the first response carries the first DC catalogue; wherein the first DC catalogue is created by the first network function based at least on first information, and includes information related to a data channel program and/or a data channel application and/or a data channel service; the first information includes at least one of subscription information, terminal information, information carried in the first request, or user information.

In an embodiment, the first DC catalogue includes at least one of the following information related to the data channel program and/or the data channel application and/or the data channel service:
an identifier;
a priority level;
software information;
an auto trigger attribute; or
user information.

In an embodiment, the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

In an embodiment, the subscription information includes at least one of the followings:
data channel subscription information;
data channel service subscription information;
data channel application subscription information;
service subscription information;
user subscription information;
a data channel program allowed to use;
a data channel service allowed to use;
a data channel application allowed to use; or
data channel authorization information.

In an embodiment, the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

In an embodiment, the terminal information includes at least one of the followings:
data channel capability information of a terminal; or
terminal type information.

In an embodiment, the information carried in the first request includes at least one of the followings:
data channel information; or
the user information.

In an embodiment, the user information at least includes a user number.

In an embodiment, the third communication interface 121 is further configured to:
send a second request to the second network function based on the first DC catalogue; the second request is used to request downloading of a first program and/or a first application and/or a service program and/or a service application;
receive the first program and/or the first application and/or the service program and/or the service application delivered by the second network function.

In an embodiment, the third communication interface 121 is further configured to:
send a data channel establishment request to the first network function;
receive a response to the data channel establishment request; wherein the response to the data channel establishment request is returned by the first network function, and carries a data channel negotiation result.

It should be noted that the specific processing process of the third processor 122 and the third communication interface 121 can be understood by referring to the above method.

Obviously, in practical applications, the various components in the first terminal 120 are coupled together through a bus system 124. It can be understood that the bus system 124 is configured to realize the connection and communication between these components. In addition to the data bus, the bus system 124 further includes a power bus, a control bus and a status signal bus. However, for the sake of clarity, all buses are labeled as the bus system 124 in FIG. 12.

The third memory 123 in the embodiments of the present disclosure is used to store various types of data to support the operation of the first terminal 120. Examples of such data include any computer program used to operate on the first terminal 120.

The method disclosed in the embodiments of the present disclosure may be applied to or implemented by the third processor 122. The third processor 122 may be an integrated circuit chip with signal processing capabilities. During implementation, each step of the above method can be completed by an integrated logic circuit of hardware in the third processor 122 or in the form of software instructions. The above-mentioned third processor 122 may be a general-purpose processor, a DSP, or other programmable logic devices, discrete gates or transistor logic devices, discrete hardware components, etc. The third processor 122 can implement or execute the methods, steps and logic block diagrams disclosed in the embodiments of the present disclosure. The general-purpose processor may be a microprocessor or any conventional processor, etc. The steps of the method disclosed in the embodiments of the present disclosure may be directly executed by a hardware decoding processor, or executed by a combination of hardware and software modules in the decoding processor. The software module can be located in a storage medium, which is located in a third memory 123. The third processor 122 reads the information from the third memory 123 and completes the steps of the above method in combination with its hardware.

In an exemplary embodiment, the first terminal 120 may be implemented by one or more ASICs, DSPs, PLDs, CPLDs, FPGAs, general purpose processors, controllers, MCUs, microprocessors, or other electronic components to perform the aforementioned methods.

Based on the hardware implementation of the above program modules, and in order to implement the method at the server side in the embodiments of the present disclosure, embodiments of the present disclosure further provide a server, as shown in FIG. 13, the server 130 includes:
a fourth communication interface 131, configured to exchange information with other network nodes;
a fourth processor 132, connected to the fourth communication interface 131 to enable information exchange with other network nodes, and configured to, when executing a computer program, perform one or more methods provided in a technical solution at the server side. The computer program is stored in the fourth memory 133.

Specifically, the fourth communication interface 131 is configured to:
receive a data channel program and/or a data channel application and/or a data channel service uploaded by a second terminal;
send, to the first network function, the data channel program and/or data channel application and/or data channel service that is verified or approved;
wherein the verified or approved data channel program and/or data channel application and/or data channel service is used by the first network function to, upon receiving a first request, decide, based at least on the first information, whether to return the first DC catalogue and/or create the first DC catalogue and/or return the first DC catalogue; the first request is used to obtain the first DC catalogue; the first DC catalogue includes information related to the data channel program and/or the data channel application and/or the data channel service; the first information includes at least one of the terminal information, the information carried in the first request, or the user information.

In an embodiment, the fourth communication interface 131 is further configured to send the subscription information and/or the user information to the first network function.

In an embodiment, the first DC catalogue includes at least one of the following information related to the data channel program and/or the data channel application and/or the data channel service:
an identifier;
a priority level;
software information;
an auto trigger attribute; or
user information.

In an embodiment, the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

In an embodiment, the subscription information includes at least one of the followings:
data channel subscription information;
data channel service subscription information;
data channel application subscription information;
service subscription information;
user subscription information;
a data channel program allowed to use;
a data channel service allowed to use;
a data channel application allowed to use; or
data channel authorization information.

In an embodiment, the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

In an embodiment, the terminal information includes at least one of the followings:
data channel capability information of a terminal; or
terminal type information.

In an embodiment, the information carried in the first request includes at least one of the followings:
data channel information; or
the user information.

In an embodiment, the user information at least includes a user number.

It should be noted that the specific processing process of the fourth processor 132 and the fourth communication interface 131 can be understood by referring to the above method.

Obviously, in practical applications, the various components in the server 130 are coupled together through a bus system 134. It can be understood that the bus system 134 is configured to realize the connection and communication between these components. In addition to the data bus, the bus system 134 further includes a power bus, a control bus, and a status signal bus. However, for the sake of clarity, all buses are labeled as the bus system 134 in FIG. 13.

The fourth memory 133 in the embodiments of the present disclosure is used to store various types of data to support the operation of the server 130. Examples of such data include any computer program used to operate on the server 130.

The method disclosed in the embodiments of the present disclosure may be applied to or implemented by the fourth processor 132. The fourth processor 132 may be an integrated circuit chip with signal processing capabilities. During implementation, each step of the above method can be completed by an integrated logic circuit in hardware of the fourth processor 132 or in the form of software instructions. The above-mentioned fourth processor 132 may be a general-purpose processor, a DSP, or other programmable logic devices, discrete gates or transistor logic devices, discrete hardware components, etc. The fourth processor 132 can implement or execute the methods, steps and logic block diagrams disclosed in the embodiments of the present disclosure. The general-purpose processor may be a microprocessor or any conventional processor, etc. The steps of the method disclosed in the embodiments of the present disclosure may be directly executed by a hardware decoding processor, or executed by a combination of hardware and software modules in the decoding processor. The software module can be located in a storage medium, which is located in a fourth memory 133. The fourth processor 132 reads the information from the fourth memory 133 and completes the steps of the above method in combination with its hardware.

In an exemplary embodiment, the server 130 may be implemented by one or more ASICs, DSPs, PLDs, CPLDs, FPGAs, general purpose processors, controllers, MCUs, microprocessors, or other electronic components to perform the aforementioned methods.

It may be understood that the memory (first memory 103, second memory 113, third memory 123, fourth memory 133) in the embodiments of the present disclosure may be a volatile memory or a non-volatile memory, or may include both. The non-volatile memory may be a Read-Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface memory, an optical disc, or a Compact Disc Read-Only Memory (CD-ROM); the magnetic surface memory may be a disk memory or a tape memory. The volatile memory may be a Random Access Memory (RAM), which is used as an external cache. By way of example but not limitation, many types of RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), SyncLink Dynamic Random Access Memory (SLDRAM), and Direct Rambus Random Access Memory (DRRAM). The memory according to the embodiments of the present disclosure is intended to include, but is not limited to, these and any other suitable types of memory.

In an exemplary embodiment, embodiments of the present disclosure further provide a storage medium, that is, a computer storage medium, specifically a computer-readable storage medium. For example, it may include a first memory 103 storing a computer program, the computer program can be executed by the first processor 102 of the first network function 100 to implement the steps of the method at the first network function side. For another example, it may include a second memory 113 storing a computer program, and the computer program can be executed by the second processor 112 of the second network function 110 to implement the steps of the method at the second network function side. Similarly, it may include a third memory 123 storing a computer program, and the computer program can be executed by the third processor 122 of the first terminal 120 to implement the steps of the method at the first terminal side. Additionally, it may include a fourth memory 133 storing a computer program, and the computer program can be executed by the fourth processor 132 of the server 130 to implement the steps of the method at the server side. The computer-readable storage medium may be a memory such as the FRAM, the ROM, the PROM, the EPROM, the EEPROM, the Flash Memory, the magnetic surface memory, the optical disk, or the CD-ROM.

It should be noted that terms "first", "second" and the like are used to distinguish similar objects and are not intended to describe a specific sequence or order.

In the present disclosure, the term "and/or" describes the association relationship between associated objects, indicating that there can be three relationships, for example, A and/or B can mean: A exists alone, A and B exist simultaneously, and B exists alone. In addition, the term "at least one" herein indicates any one of multiple elements or any combination of at least two of multiple elements. For example, at least one of A, B, and C may indicate any one or more elements selected from the set consisting of A, B, and C.

Furthermore, the technical solutions according to the embodiments of the present disclosure may be combined in any manner, provided that no conflict arises.

The above description is merely related to preferred embodiments of the present disclosure, and is not intended to limit the protection scope of the present disclosure.

## Claims

1. A message interaction method, applied to a first network function, the method comprising:
receiving a first request sent by a first device, wherein the first request is used to obtain a first Data Channel (DC) catalogue;
deciding, based at least on first information, whether to return the first DC catalogue and/or create the first DC catalogue and/or return the first DC catalogue; wherein, the first information comprises at least one of subscription information, terminal information, information carried in the first request, or user information; the first DC catalogue comprises information related to a data channel program and/or a data channel application and/or a data channel service.

2. The method according to claim 1, wherein the first DC catalogue comprises at least one of the following information related to the data channel program and/or the data channel application and/or the data channel service:
an identifier;
a priority level;
software information;
an auto trigger attribute; or
user information.

3. The method according to claim 2, wherein the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

4. The method according to claim 1, wherein the subscription information comprises at least one of the followings:
data channel subscription information;
data channel service subscription information;
data channel application subscription information;
service subscription information;
user subscription information;
a data channel program or data channel programs that are allowed to use;
a data channel service or data channel services that are allowed to use;
a data channel application or data channel applications that are allowed to use; or
data channel authorization information.

5. The method according to claim 4, wherein the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

6. The method according to claim 1, wherein the terminal information comprises at least one of the followings:
data channel capability information of a terminal; or
terminal type information.

7. The method according to claim 1, wherein the information carried in the first request comprises at least one of the followings:
data channel information; or
the user information.

8. The method according to claim 1, wherein the user information at least comprises a user number.

9. The method according to any one of claims 1 to 8, wherein creating, based at least on the first information, the first DC catalogue and/or returning, based at least on the first information, the first DC catalogue, comprising:
creating the first DC catalogue and/or returning the first DC catalogue in the case that at least one of the following conditions is met:
the data channel program or the data channel programs are allowed and/or supported to use;
the data channel service or the data channel services are allowed and/or supported to use; or
the data channel application or the data channel applications are allowed and/or supported to use.

10. The method according to any one of claims 1 to 8, further comprising:
not creating the first DC catalogue and/or not returning the first DC catalogue in the case that at least one of the following conditions is met:
the data channel program or the data channel programs are not allowed and/or not supported to use;
the data channel service or the data channel services are not allowed and/or not supported to use; or
the data channel application or the data channel applications are not allowed and/or not supported to use.

11. The method according to any one of claims 1 to 8, wherein the first device comprises a second network function and/or a first terminal; after returning the first DC catalogue, the method further comprises:
receiving a second request sent by the second network function; wherein the second request is sent by the first terminal and is used to request downloading a first program and/or a first application and/or a service program and/or a service application;
delivering the first program and/or the first application and/or the service program and/or the service application to the second network function.

12. The method according to any one of claims 1 to 8, wherein the first device comprises a first terminal; before receiving the first request sent by the first device, the method further comprises:
receiving a data channel establishment request sent by the first terminal;
returning, to the first terminal, a response to the data channel establishment request; wherein the response to the data channel request carries a data channel negotiation result.

13. The method according to any one of claims 1 to 8, wherein before creating the first DC catalogue and/or returning the first DC catalogue, the method further comprises:
receiving the data channel program and/or the data channel application and/or the data channel service uploaded by a server;
wherein the uploaded data channel program and/or data channel application and/or data channel has been verified or approved.

14. The method according to any one of claims 1 to 8, further comprising:
receiving the subscription information and/or the user information sent by a server.

15. A message interaction method, applied to a second network function, the method comprising:
receiving a first request sent by a first terminal, and sending the first request to a first network function; wherein the first request is used to obtain a first Data Channel (DC) catalogue;
receiving a first response returned by the first network function, and sending the first response to the first terminal; wherein
the first response indicates that the first DC catalogue is not returned, or the first response carries the first DC catalogue; wherein the first DC catalogue is created based at least on first information, and comprises information related to a data channel program and/or a data channel application and/or a data channel service; the first information comprises at least one of subscription information, terminal information, information carried in the first request, or user information.

16. The method according to claim 15, wherein the first DC catalogue comprises at least one of the following information related to the data channel program and/or the data channel application and/or the data channel service:
an identifier;
a priority level;
software information;
an auto trigger attribute; or
user information.

17. The method according to claim 16, wherein the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

18. The method according to claim 15, wherein the subscription information comprises at least one of the followings:
data channel subscription information;
data channel service subscription information;
data channel application subscription information;
service subscription information;
user subscription information;
a data channel program allowed to use;
a data channel service allowed to use;
a data channel application allowed to use; or
data channel authorization information.

19. The method according to claim 18, wherein the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

20. The method according to claim 15, wherein the terminal information comprises at least one of the followings:
data channel capability information of a terminal; or
terminal type information.

21. The method according to claim 15, wherein the information carried in the first request comprises at least one of the followings:
data channel information; or
the user information.

22. The method according to claim 15, wherein the user information comprises at least a user number.

23. The method according to any one of claims 15 to 22, further comprising:
in the case that the first response carries the first DC catalogue, receiving a second request sent by the first terminal; wherein the second request is used to request downloading a first program and/or a first application and/or a service program and/or a service application;
delivering the first program and/or the first application and/or the service program and/or the service application to the first terminal.

24. The method according to claim 23, wherein the delivering the first program and/or the first application and/or the service program and/or the service application to the first terminal comprises at least one of the followings:
delivering, to the first terminal, the first program and/or the first application and/or the service program and/or the service application that is stored locally; or
sending the second request to the first network function, and forwarding to the first terminal the first program and/or the first application and/or the service program and/or the service application delivered by the first network function.

25. A message interaction method, applied to a first terminal, the method comprising:
sending a first request to a first network function and/or a second network function, wherein the first request is used to obtain a first Data Channel (DC) catalogue;
receiving a first response returned by the first network function and/or the second network function; wherein
the first response indicates that the first DC catalogue is not returned, or the first response carries the first DC catalogue; wherein the first DC catalogue is created by the first network function based at least on first information, and comprises information related to a data channel program and/or a data channel application and/or a data channel service; the first information comprises at least one of subscription information, terminal information, information carried in the first request, or user information.

26. The method according to claim 25, wherein the first DC catalogue comprises at least one of the following information related to the data channel program and/or the data channel application and/or the data channel service:
an identifier;
a priority level;
software information;
an auto trigger attribute; or
user information.

27. The method according to claim 26, wherein the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

28. The method according to claim 25, wherein the subscription information comprises at least one of the followings:
data channel subscription information;
data channel service subscription information;
data channel application subscription information;
service subscription information;
user subscription information;
a data channel program allowed to use;
a data channel service allowed to use;
a data channel application allowed to use; or
data channel authorization information.

29. The method according to claim 28, wherein the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

30. The method according to claim 25, wherein the terminal information comprises at least one of the followings:
data channel capability information of a terminal; or
terminal type information.

31. The method according to claim 25, wherein the information carried in the first request comprises at least one of the followings:
data channel information; or
the user information.

32. The method according to claim 25, wherein the user information comprises at least a user number.

33. The method according to any one of claims 25 to 32, further comprising:
sending a second request to the second network function based on the first DC catalogue; wherein the second request is used to request downloading a first program and/or a first application and/or a service program and/or a service application;
receiving the first program and/or the first application and/or the service program and/or the service application delivered by the second network function.

34. The method according to claim 33, further comprising:
deciding whether to automatically send the second request to the second network function based on an auto trigger attribute comprised in the first DC catalogue.

35. The method according to any one of claims 25 to 34, wherein before the sending the first request to the first network function and/or the second network function, the method comprises:
sending a data channel establishment request to the first network function;
receiving a response to the data channel establishment request; wherein the response to the data channel establishment request is returned by the first network function, and carries a data channel negotiation result.

36. A message interaction method, applied to a server, the method comprising:
receiving a data channel program and/or a data channel application and/or a data channel service uploaded by a second terminal;
sending, to a first network function, the data channel program and/or data channel application and/or data channel service that is verified or approved;
wherein the verified or approved data channel program and/or data channel application and/or data channel service is used by the first network function to, upon receiving a first request, decide, based at least on first information, whether to return a first Data Channel (DC) catalogue and/or create the first DC catalogue and/or return the first DC catalogue; the first request is used to obtain the first DC catalogue; the first DC catalogue comprises information related to the data channel program and/or the data channel application and/or the data channel service; the first information comprises at least one of subscription information, terminal information, information carried in the first request, or user information.

37. The method according to claim 36, further comprising:
sending the subscription information and/or the user information to the first network function.

38. The method according to claim 36 or 37, wherein the first DC catalogue comprises at least one of the following information related to the data channel program and/or the data channel application and/or the data channel service:
an identifier;
a priority level;
software information;
an auto trigger attribute; or
user information.

39. The method according to claim 38, wherein the auto trigger attribute is used to indicate at least one of the followings:
whether to automatically trigger downloading of the data channel service and/or the data channel program and/or the data channel application; or
whether to automatically trigger execution of the data channel service and/or the data channel program and/or the data channel application.

40. The method according to claim 36 or 37, wherein the subscription information comprises at least one of the followings:
data channel subscription information;
data channel service subscription information;
data channel application subscription information;
service subscription information;
user subscription information;
a data channel program allowed to use;
a data channel service allowed to use;
a data channel application allowed to use; or
data channel authorization information.

41. The method according to claim 40, wherein the data channel authorization information is used to indicate at least one of the followings:
whether to allow to use a data channel capability;
whether to allow to use and/or activate the data channel service or the data channel services;
whether to allow to use and/or activate the data channel application or the data channel applications; or
whether to allow to use and/or activate the data channel program or the data channel programs.

42. The method according to claim 36 or 37, wherein the terminal information comprises at least one of the followings:
data channel capability information of a terminal; or
terminal type information.

43. The method according to claim 36 or 37, wherein the information carried in the first request comprises at least one of the followings:
data channel information; or
the user information.

44. The method according to claim 36 or 37, wherein the user information comprises at least a user number.

45. A message interaction apparatus, comprising:
a first receiving unit, configured to receive a first request sent by a first device, the first request being used to obtain a first Data Channel (DC) catalogue;
a first processing unit, configured to decide, based at least on first information, whether to return the first DC catalogue and/or create the first DC catalogue and/or return the first DC catalogue; wherein the first information comprises at least one of subscription information, terminal information, information carried in the first request, or user information; the first DC catalogue comprises information related to a data channel program and/or a data channel application and/or a data channel service.

46. A message interaction apparatus, comprising:
a first transceiver unit, configured to receive a first request sent by a first terminal, and send the first request to a first network function; wherein the first request is used to obtain a first Data Channel (DC) catalogue;
a second transceiver unit, configured to receive a first response returned by the first network function and send the first response to the first terminal; wherein
the first response indicates that the first DC catalogue is not returned, or the first response carries the first DC catalogue; wherein the first DC catalogue is created based at least on first information, and comprises information related to a data channel program and/or a data channel application and/or a data channel service; the first information comprises at least one of subscription information, terminal information, information carried in the first request, or user information.

47. A message interaction apparatus, comprising:
a first sending unit, configured to send a first request to a first network function and/or a second network function, wherein the first request is used to obtain a first Data Channel (DC) catalogue;
a second receiving unit, configured to receive a first response returned by the first network function and/or the second network function; wherein
the first response indicates that the first DC catalogue is not returned, or the first response carries the first DC catalogue; wherein the first DC catalogue is created by the first network function based at least on first information, and comprises information related to a data channel program and/or a data channel application and/or a data channel service; the first information comprises at least one of subscription information, terminal information, information carried in the first request, or user information.

48. A message interaction apparatus, comprising:
a third receiving unit, configured to receive a data channel program and/or a data channel application and/or a data channel service uploaded by a second terminal;
a second sending unit, configured to send, to a first network function, the data channel program and/or data channel application and/or data channel service that is verified or approved;
wherein the verified or approved data channel program and/or data channel application and/or data channel service is used by the first network function to, upon receiving a first request, decide, based at least on first information, whether to return a first Data Channel (DC) catalogue and/or create the first DC catalogue and/or return the first DC catalogue; the first request is used to obtain the first DC catalogue; the first DC catalogue comprises information related to the data channel program and/or the data channel application and/or the data channel service; the first information comprises at least one of subscription information, terminal information, information carried in the first request, or user information.

49. A first network function, comprising: a first processor and a first communication interface; wherein
the first communication interface is configured to receive a first request sent by a first device, wherein the first request is used to obtain a first Data Channel (DC) catalogue;
the first processor is configured to decide, based at least on first information, whether to return the first DC catalogue and/or create the first DC catalogue and/or return the first DC catalogue; wherein the first information comprises at least one of subscription information, terminal information, information carried in the first request, or user information; the first DC catalogue comprises information related to a data channel program and/or a data channel application and/or a data channel service.

50. A second network function, comprising: a second processor and a second communication interface; wherein
the second communication interface is configured to receive a first request sent by a first terminal, and send the first request to a first network function; and to receive a first response returned by the first network function, and send the first response to the first terminal; wherein
the first request is used to obtain a first Data Channel (DC) catalogue; the first response indicates that the first DC catalogue is not returned, or the first response carries the first DC catalogue; wherein the first DC catalogue is created based at least on first information, and comprises information related to a data channel program and/or a data channel application and/or a data channel service; the first information comprises at least one of subscription information, terminal information, information carried in the first request, or user information.

51. A first terminal, comprising: a third processor and a third communication interface; wherein
the third communication interface is configured to send a first request to a first network function and/or a second network function, wherein the first request is used to obtain a first Data Channel (DC) catalogue; and to receive a first response returned by the first network function and/or the second network function; wherein
the first response indicates that the first DC catalogue is not returned, or the first response carries the first DC catalogue; wherein the first DC catalogue is created by the first network function based at least on first information, and comprises information related to data channel program and/or data channel application and/or data channel service; the first information comprises at least one of subscription information, terminal information, information carried in the first request, or user information.

52. A server, comprising: a fourth processor and a fourth communication interface; wherein
the fourth communication interface is configured to receive a data channel program and/or a data channel application and/or a data channel service uploaded by a second terminal; and to send, to a first network function, the data channel program and/or data channel application and/or data channel service that is verified or approved; wherein
the verified or approved data channel program and/or data channel application and/or data channel service is used by the first network function to, upon receiving a first request, decide, based at least on first information, whether to return a first Data Channel (DC) catalogue and/or create the first DC catalogue and/or return the first DC catalogue; the first request is used to obtain the first DC catalogue; the first DC catalogue comprises information related to the data channel program and/or the data channel application and/or the data channel service; the first information comprises at least one of subscription information, terminal information, information carried in the first request, or user information.

53. A first network function, comprising: a first processor and a first memory configured to store a computer program executable by the processor,
wherein the first processor is configured to execute the computer program to perform the steps of the method according to any one of claims 1 to 14.

54. A second network function, comprising: a second processor and a second memory configured to store a computer program executable by the processor,
wherein the second processor is configured to execute the computer program to perform the steps of the method according to any one of claims 15 to 24.

55. A first terminal, comprising: a third processor and a third memory configured to store a computer program executable by the processor,
wherein the third processor is configured to execute the computer program to perform the steps of the method according to any one of claims 25 to 35.

56. A server, comprising: a fourth processor and a fourth memory configured to store a computer program executable by the processor,
wherein the fourth processor is configured to execute the computer program to perform the steps of the method according to any one of claims 36 to 44.

57. A storage medium, storing thereon a computer program, wherein the computer program is used to be executed by a processor to implement the steps of the method according to any one of claims 1 to 14, or the steps of the method according to any one of claims 15 to 24, or the steps of the method according to any one of claims 25 to 35, or the steps of the method according to any one of claims 36 to 44.
